(19) Europäisches Patentamt
European Patent Office
Office européen des brevets

(11) **EP 3 840 237 A1**

(12) **EUROPÄISCHE PATENTANMELDUNG**

(43) Veröffentlichungstag:
**23.06.2021 Patentblatt 2021/25**

(51) Int Cl.:
***H04B 3/462*** *(2015.01)*

(21) Anmeldenummer: **20214656.9**

(22) Anmeldetag: **16.12.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(30) Priorität: **18.12.2019 DE 102019220091**

(71) Anmelder: **GiaX GmbH**
**91058 Erlangen (DE)**

(72) Erfinder:
• **Hellwig, Jörg**
  **58706 Menden (DE)**
• **Blohmann, Andreas**
  **91207 Lauf (DE)**
• **Stadali, Holger**
  **91058 Erlangen (DE)**

(74) Vertreter: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**

(54) **VORRICHTUNG UND VERFAHREN ZUM ERFASSEN VON GRUPPENLAUFZEITINFORMATIONEN UND VORRICHTUNG UND VERFAHREN ZUM SENDEN EINES MESSSIGNALS ÜBER EIN ÜBERTRAGUNGSMEDIUM**

(57) Eine Vorrichtung zum Erfassen von Gruppenlaufzeitinformationen über der Frequenz für ein Übertragungsmedium (100), umfasst: einen Empfänger (110) zum Empfangen eines Messsignals, um ein Empfangssignal zu liefern, wobei das Messsignal zumindest ein erstes Trägersignal (211) bei einer ersten Trägerfrequenz, ein zweites Trägersignal (212) bei einer zweiten Trägerfrequenz und ein drittes Trägersignal (213) bei einer dritten Trägerfrequenz aufweist, wobei Sende-Phaseninformationen über die Trägersignale bekannt sind oder herleitbar sind; einen Frequenzanalysator (120) zum Analysieren des Empfangssignals, um Empfangs-Phaseninformationen über das erste Trägersignal (211), das zweite Trägersignal (212) und das dritte Trägersignal (213) zu erhalten; und einen Prozessor (130) zum Bilden (310) einer ersten kombinierten Phaseninformation aus den Empfangs-Phaseninformationen von einem ersten Paar von Trägersignalen und zum Bilden einer zweiten kombinierten Phaseninformation aus den Empfangs-Phaseninformationen von einem zweiten Paar von Trägersignalen, wobei das zweite Paar von Trägersignalen unterschiedlich zu dem ersten Paar von Trägersignalen ist, zum Bilden (320) einer ersten Gruppenlaufzeitinformation aus der ersten kombinierten Phaseninformation und den Sende-Phaseninformationen bezüglich des ersten Paares von Trägersignalen und zum Bilden einer zweiten Gruppenlaufzeitinformation aus der zweiten kombinierten Phaseninformation und den Sende-Phaseninformationen bezüglich des zweiten Paares von Trägersignalen, und zum Zuordnen (330) der ersten Gruppenlaufzeitinformation zu einer ersten Frequenz und der zweiten Gruppenlaufzeitinformation zu einer zweiten Frequenz, wobei die erste Frequenz von Frequenzen des ersten Paares von Trägersignalen abgeleitet ist, und wobei die zweite Frequenz von Frequenzen des zweiten Paares von Trägersignalen abgeleitet ist.

Fig. 1

**Beschreibung**

Die vorliegende Erfindung bezieht sich auf das Ausmessen und Charakterisieren eines Übertragungsmediums wie z. B. eines Koaxialkabels oberhalb seiner normalen Arbeitsbandbreite.

Das HelEOS-System, das von der Giax GmbH angeboten wird, umfasst eine Modem- und Switch-Technologie, die aus der Zusammenschaltung von Punkt-zu-Punkt-Ethernet-Verbindungen über existierende Koaxialkabel zu einem Ethernet-Overlay-System wird. Dieses Ethernet-Overlay-System bietet die Übertragung von Daten auf heute brachliegenden Frequenzen oberhalb der aktuell verwendeten Frequenzen, die auch als "Whitespaces" bezeichnet werden. Den Zugang zu diesen Frequenzen erhält man durch einen Diplexer, der die bestehenden Upstream- und Downstream-Frequenzen für bekannte Systeme, wie beispielsweise DOCSIS und DVB-C sowie einen neuen Frequenzbereich oberhalb von 1 GHz bzw. 1,2 GHz bei DOCSIS 3.1 zur Verfügung stellt. Das HelEOS-System sucht den optimalen Frequenzbereich für die Übertragung und kann sich auch im laufenden Betrieb an mögliche Veränderungen der Übertragungsstrecke durch Anpassen der verwendeten Modulation adaptieren. Damit lässt sich ohne größere Änderungen in der Kabelinfrastruktur und ohne Verlegen einer Glasfaser eine Vervielfachung der für schnelle Internetanschlüsse zur Verfügung stehenden Datenraten erreichen. Das HelEOS-System kann bis zu 10 Gbit/s im Downstream und 10 Gbit/s im Upstream-Bereich transportieren, so dass zusammen mit den in DOCSIS erzielbaren Datenraten (in den unteren Frequenzen) eine 25-30 Gbit/s-Summenrate über ein einzelnes Koaxialkabel möglich wird.

Um den Bereich der koaxialen Infrastruktur oberhalb der normalen für die koaxiale Infrastruktur vorgesehenen Frequenzen zu nutzen, ist es nötig, eine genaue Charakterisierung bzw. Messung der koaxialen Infrastruktur durchzuführen, um dann, basierend auf der erhaltenen Charakterisierung der koaxialen Infrastruktur bzw. allgemein gesagt des Übertragungsmediums den Sender (und damit auch den Empfänger) entsprechend anzusteuern.

Typischerweise werden Übertragungsparameter und insbesondere Gruppenlaufzeitinformationen eines Zweitors mit einem Netzwerkanalysator gemessen. Ein Netzwerkanalysator, der für eine Zweitor-Messung eingesetzt wird, benötigt eine Synchronisation zwischen dem Sender und dem Empfänger, damit genaue Phaseninformationen erhalten werden können. Diese Synchronisation ist jedoch bei der oben beschriebenen Anwendung nicht ohne Weiteres einhaltbar, da es bei den Messungen um Leitungslängen geht, die im Bereich von Hunderten von Metern liegen können. Daher kann eine Synchronisation zwischen einem Sender und einem Empfänger über einen derart großen Abstand nur schwierig bzw. mit hohem Aufwand, wenn überhaupt, hergestellt werden, da der Sender eines Signals und der Empfänger für genau dieses gesendete und von dem Kabel veränderte Signal nicht an der selben Ort und Stelle sein werden.

Die Aufgabe der vorliegenden Erfindung besteht darin, ein verbessertes Konzept zum Erfassen von Gruppenlaufzeitinformationen über der Frequenz oder zum Senden eines Messsignals über ein Übertragungsmedium zu schaffen.

Diese Aufgabe wird durch eine Vorrichtung zum Erfassen von Gruppenlaufzeitinformationen gemäß Patentanspruch 1, eine Vorrichtung zum Senden eines Messsignals gemäß Patentanspruch 11, ein Verfahren zum Erfassen von Gruppenlaufzeitinformationen gemäß Patentanspruch 13, ein Verfahren zum Senden eines Messsignals gemäß Patentanspruch 14, oder ein Computer-Programm gemäß Patentanspruch 15 gelöst.

Die vorliegende Erfindung basiert auf der Erkenntnis, dass ein Messsignal, das wenigstens drei Trägersignale bei drei verschiedenen Trägerfrequenzen aufweist, wobei das Messsignal vorzugsweise ein zyklisches Messsignal ist, es ermöglicht, durch Verwendung einer Frequenzanalyse des Messsignals auf Empfängerseite und nachgeschaltete Verarbeitung der am Empfänger angekommenen Phaseninformationen der Trägersignale über Frequenzgrenzen hinweg, die Gruppenlaufzeitinformationen zu ermitteln.

Insbesondere wird durch einen Prozessor eine kombinierte Phaseninformation aus den Empfangs-Phaseninformationen von wenigstens zwei Trägersignalen gebildet, um dann die Gruppenlaufzeitinformationen aus den kombinierten Phaseninformationen und den Sende-Phaseninformationen zu ermitteln, die bekannt sind oder vom Sender zum Empfänger z. B. über einen zweiten Kanal übermittelt werden können. Da die Sende-Phaseninformationen jedoch frei wählbar sind und vorzugsweise auf +/- 90 Grad für einen Träger und auf 0/180 Grad für den frequenzmäßig angrenzenden Träger eingestellt werden, sind die Sende-Phaseninformationen vom Empfänger auch selbst auf der Basis der empfangenen Trägersignale schätzbar, insbesondere wenn nicht nur drei Trägersignale in einem "Durchlauf" eingesetzt werden, sondern wenn eine größere Anzahl von Trägersignalen, wie beispielsweise 20 bis 100 Trägersignale pro Durchlauf eingesetzt werden.

Auf Senderseite wird ein vorzugsweise zyklisches Messsignal mit einer Anzahl von Trägersignalen, die mindestens gleich drei ist und deren Anzahl nach oben lediglich durch die verwendeten Sender/Empfänger-Elemente begrenzt sind und z. B. bei 100 liegt, erzeugt. Dieses typischerweise digital erzeugte Signal, bei dem die Phasen frequenzmäßig benachbarter Trägersignale vorzugsweise um 90 Grad voneinander beabstandet sein sollten, wird vorzugsweise digital erzeugt und in einem Senderspeicher abgelegt. Dann wird dieses Signal in einer "Dauerschleife" abgespielt und von einem Lokaloszillator vom Basisband in das zu charakterisierende Band umgesetzt und in das Übertragungsmedium, wie beispielsweise eine koaxiale Infrastruktur, eingespeist.

Auf Empfängerseite wird mit einem Lokaloszillator das zu charakterisierende Übertragungsband in das Basisband heruntergemischt und dort in einem Empfängerspeicher nach Analog/Digital-Wandlung eingespeichert. Das gespeicherte Signal wird dann einer Frequenzanalyse unterzogen, um die Phasenwerte der Trägersignale auf Empfangsseite zu bestimmen. Dabei ist keine Synchronisation zwischen Sender und Empfänger nötig. Stattdessen wird die Gruppenlaufzeitbestimmung über der Frequenz dadurch durchgeführt, dass von zwei benachbarten Trägersignalen eine kombinierte Phaseninformation der Empfangs-Phaseninformationen gebildet wird, wobei dann aus der kombinierten Phaseninformation und den über einen zweiten Kanal übertragenen oder auf Empfängerseite selbst hergeleiteten Sende-Phaseninformationen gebildet wird. Diese Gruppenlaufzeitinformation wird dann einer der Trägerfrequenzen jeweils zugeordnet.

Wenn eine Gruppenlaufzeitinformation durch Auswertung der Empfangs-Phaseninformationen des zweiten und des ersten Trägersignals bestimmt worden ist, so kann diese Gruppenlaufzeitinformation einer Frequenz zugeordnet werden, die gleich der ersten Trägerfrequenz, oder der zweiten Trägerfrequenz oder einer anderen Trägerfrequenz ist, die beispielsweise zwischen der ersten und der zweiten Trägerfrequenz liegt. Damit wird unter Verwendung der Empfangs-Phaseninformationen von jeweils zwei benachbarten Trägersignalen eine Gruppenlaufzeitinformation berechnet, so dass für wenigstens drei Trägersignale zwei Gruppenlaufzeitinformationen für zwei verschiedene Frequenzwerte erhalten werden, um eine Gruppenlaufzeitinformation über der Frequenz des Übertragungsmediums zu erhalten.

Je nach Implementierung wird es bevorzugt, z. B. 20 bis 100 Träger in einem Messsignal zu verwenden, so dass pro Frequenzanalyse und anschließende Auswertung des Empfangssignals (n-1) Gruppenlaufzeitinformationen erhalten werden, wenn das Messsignal n Träger hatte. Um den gesamten Frequenzbereich zwischen z. B. 1 GHz und 4 GHz einer koaxialen Infrastruktur ausmessen zu können, können beispielsweise fünf jeweils 600 MHz breite Trägersignale verwendet werden, die unter Verwendung einer speziell eingestellten Lokaloszillator-Frequenz jeweils vom Basisband aufwärts gemischt werden, um einen entsprechenden Frequenzausschnitt des Übertragungsmediums zu erfassen.

Insbesondere kann aufgrund der Anzahl der Trägersignale in einem "Trial" und aufgrund der Festlegung der Bandbreite eines Trials und aufgrund der entsprechenden LO-Steuerung ein optimaler Kompromiss zwischen einer parallelen/seriellen Messung des Übertragungsmediums erreicht werden. Wenn eine sehr große Anzahl von Trägern pro Messsignal eingesetzt wird und ein entsprechender Frequenzabstand der Träger gewählt wird, benötigt man für die Charakterisierung eines entsprechenden Übertragungsbereichs womöglich nur einen einzigen Trial, also nur eine einzige LO-Einstellung. Damit wird eine voll parallele Charakterisierung des Übertragungsmediums erreicht. Wenn dagegen die Anzahl der Träger oder der Trägerabstand entsprechend kleiner gewählt wird, wird es für die komplette Charakterisierung des Übertragungsbands nötig sein, mehrere "Trials" durchzuführen, wie beispielsweise 2 bis 10 Trials, was eine eher serielle Vermessung des Übertragungsbands ggf. mit sehr feiner Frequenzauflösung darstellt, um relative schmalbandige "Ereignisse" wie scharfe Resonanzen zu erfassen.

Die vorliegende Erfindung arbeitet gewissermaßen als "verteilter" Netzwerkanalysator, ohne dass eine Synchronisation zwischen Sender-LO und Empfänger-LO nötig ist bzw. allgemein eine Synchronisation zwischen Sender und Empfänger erforderlich ist. Diese Vorgehensweise wird dadurch unterstützt, dass ein zyklisches Messsignal eingesetzt wird, das auf Senderseite in einer "Dauerschleife" ausgesendet wird, so dass auf Empfängerseite völlig unabhängig von einem Sender-Timing ein "Snapshot" des Signals genommen werden kann, das auf Empfängerseite ankommt, vorausgesetzt dass der Empfänger Informationen über die vom Sender gerade aktuell verwendete LO-Frequenz hat, was bei bevorzugten Ausführungsbeispielen über einen LO-Plan erreicht wird, der zwischen dem Sender und dem Empfänger typischerweise über einen Seitenkanal ausgetauscht wird oder von vornherein fest vereinbart ist. Hierzu sind jedoch keine feinen Zeitsynchronisationen nötig, sondern es genügt eine einfache unsynchronisierte Uhr, da die zeitliche Aufeinanderfolge der verschiedenen LO-Einstellungen keine Auswirkung auf die Genauigkeit der Messung hat.

Bei bevorzugten Ausführungsbeispielen der vorliegenden Erfindung wird zur Erhöhung der Genauigkeit und zur Eliminierung statistischer Fehler jeder Frequenzausschnitt mehrmals in mehreren Snapshots aufgezeichnet und die aus jedem "Snapshot" berechneten Gruppenlaufzeitinformationen werden miteinander kombiniert, um entsprechende Mittelwerte zu erhalten, die statistisch betrachtet eine höhere Genauigkeit aufweisen als wenn nur ein einziger Snapshot verwendet wird.

Darüber hinaus wird es bevorzugt, zwischen verschiedenen Frequenzausschnitten einen Überlappungsbereich herzustellen, so dass unter Verwendung verschiedener LO-Einstellungen wenigstens zwei Gruppenlaufzeitinformationen für ein und denselben Frequenzwert erhalten werden. Unter Verwendung dieser Überlappungsbereiche wird dann eine Korrektur vorgenommen, um insgesamt für eine Charakterisierung des gesamten Übertragungsbands, das aus verschiedenen "Trials" mit verschiedenen Lokaloszillator-Einstellungen erhalten worden ist, einen durchgehenden Verlauf ohne systematisch erzeugte Niveauunterschiede zu erhalten.

Die gewonnene Charakteristik des Übertragungsmediums, das in einem sehr breitbandigen Bereich nunmehr im Hinblick auf seine Gruppenlaufzeitinformationen und bei bevorzugten Ausführungsbeispielen auch im Hinblick auf seine Dämpfung erfasst worden ist, kann von einem Sender für Nutzdaten verwendet werden, um eine entsprechende an das spezielle Übertragungsband angepasste Sendermodulation oder eine entsprechende Vorverzerrung einzustellen und gegebenenfalls dynamisch zu verändern, wenn wieder ein Messdurchlauf mit einem oder mehreren Trails stattgefunden hat.

Die Charakterisierung des Übertragungsmediums kann jedoch auch dafür eingesetzt werden, um festzustellen, ob größere Defekte existieren, aufgrund derer ein Austausch des Übertragungsmediums erforderlich sein könnte oder zumindest eine nähere Untersuchung durch Augenscheinnahme, etc.

Bevorzugte Ausführungsbeispiele der vorliegenden Erfindung werden nachfolgend bezugnehmend auf die beiliegenden Zeichnungen detailliert erläutert. Es zeigen:

Fig. 1 ein Blockschaltbild einer Vorrichtung zum Erfassen von Gruppenlaufzeitinformationen über der Frequenz;

Fig. 2a eine bevorzugte Ausführungsform des Empfängers von Fig. 1;

Fig. 2b eine schematische Darstellung eines Spektrums des Messsignals bei Einspeisung in das Übertragungsmedium;

Fig. 2c eine schematische Darstellung des Spektrums des Empfangssignals am Ausgangs des Frequenzanalysators;

Fig. 2d eine schematische Darstellung der Zuweisung der Gruppenlaufzeitinformationen in entsprechenden Zuweisungsbereichen;

Fig. 3 ein Flussdiagramm einer bevorzugten Implementierung des Prozessors von Fig. 1;

Fig. 4 eine Flussdiagrammdarstellung einer bevorzugten Vorgehensweise zum Berechnen der Gruppenlaufzeitinformationen unter Verwendung von wenigstens drei und vorzugsweise 20 bis z. B. 100 Trägersignalen mit Phasendifferenzkorrektur und Phasensprungkorrektur;

Fig. 5 eine schematische Darstellung der Ermittlung von Gruppenlaufzeitinformationen für verschiedene Träger unter und oberhalb einer Mittenfrequenz;

Fig. 6 verschiedene Alternativen der Einstellung der Sende- und der Empfangs-Amplitudencharakteristik;

Fig. 7 eine schematische Darstellung zur Illustration von Überlappungsbereichen zwischen benachbarten Frequenzausschnitten, wobei jeder Frequenzausschnitt aus einer Vielzahl von Trägersignalen besteht;

Fig. 8 eine schematische Darstellung von zwei Knoten, wobei jeder Knoten eine Vorrichtung zum Erfassen (RX) und eine Vorrichtung zum Senden (TX) und einen Seitenkanal für den LO-Plan aufweist;

Fig. 9a eine Aufstellung bevorzugter Wertebereiche für einzelne Parameter;

Fig. 9b eine beispielhafte Tabelle für LO-Plan-Nummern und zugeordnete Daten, wie beispielsweise LO-Frequenzen;

Fig. 10a eine Darstellung einer Messung des Übertragungsbands mit sechs LO-Frequenzen bezüglich der Gruppenlaufzeit;

Fig. 10b eine Darstellung analog zu Fig. 10a, jedoch für die Amplituden;

Fig. 11 eine Darstellung der Gruppenlaufzeitinformationen über der Frequenz im gesamten Übertragungsband vor und nach der Korrektur aufgrund der Überlappungsbereiche;

Fig. 12a und 12b eine Darstellung der Gruppenlaufzeit bzw. der Amplitude über der Frequenz nach der durchgeführten Korrektur; und

Fig. 13 eine Blockschaltbilddarstellung einer Vorrichtung zum Senden des Messsignals über ein Übertragungsmedium.

Das erfindungsgemäße Konzept dient dazu, eine Kanalübertragungsfunktion im Hinblick auf die Gruppenlaufzeit und vorzugsweise auch im Hinblick auf die Dämpfungseigenschaft zu identifizieren, um darauf aufbauend eine optimale Signalübertragung im Sinne maximaler Datenraten in beiden Übertragungsrichtungen erhalten zu können. Nachdem eine genaue Bestimmung des Amplituden-Frequenzgangs für die Optimierung der Übertragungsraten erwünscht ist, wird es bevorzugt, den Amplituden-Frequenzgang und insbesondere auch die Gruppenlaufzeitinformationen über der Frequenz fein aufgelöst zu ermitteln. Um eine effiziente Messung zu erhalten, die über einen großen Frequenzbereich erforderlich ist, kann bei Ausführungsbeispielen eine hohe Anzahl von Abtastwerten gleichzeitig ermittelt werden, jedoch dennoch mit einer hohen Frequenzauflösung im Bereich von 10 MHz. Durch die Nutzung einer dynamischen Allokation der Mittenfrequenz ist es sogar möglich, die Frequenzauflösung um den Faktor 100 zu steigern, so dass eine Auflösung sogar im Bereich von 100 kHz erzeugt wird. Dadurch kann eine parallele Erfassung einer hohen Anzahl von Abtastwerten der Gruppenlaufzeitinformationen bzw. der Amplituden erreicht werden, wobei insbesondere durch dynamische Allokation der Mittenfrequenz eine weitere Erhöhung der Auflösung erreicht wird, indem bei bevorzugten Ausführungsbeispielen eine Vielzahl von Trials mit unterschiedlicher LO-Frequenz ausgeführt wird.

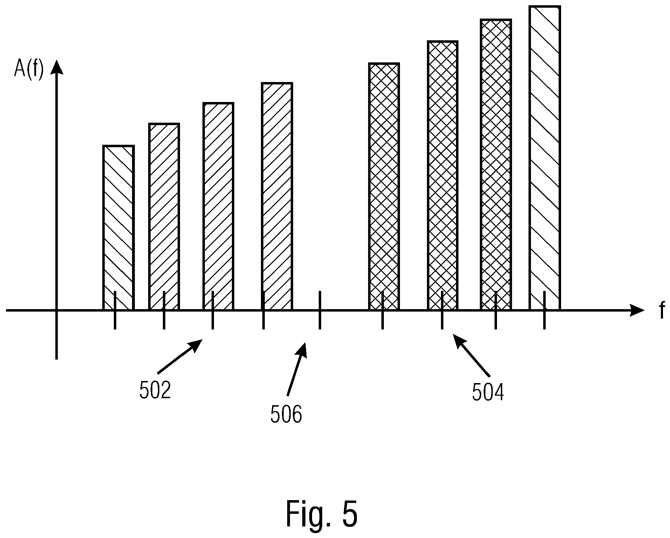

Eine fein aufgelöste Charakterisierung des Übertragungsmediums ermöglicht eine Identifikation von sogenannten "Notches", d. h. Einbrüchen in der Übertragungsfunktion durch Resonanzen. Ferner können auch andere schmalbandige Effekte aufgefunden werden, die der optimalen Ausnutzung des Übertragungsbereichs entgegenwirken. Vorzugsweise wird eine konfigurierbare Anzahl von Trägern eingesetzt, wobei insbesondere wenigstens drei Träger eingesetzt werden. Diese können unterhalb, oberhalb oder auch beidseitig eines Trägers, z. B. der Mittenfrequenz 500 in Fig. 5 liegen.

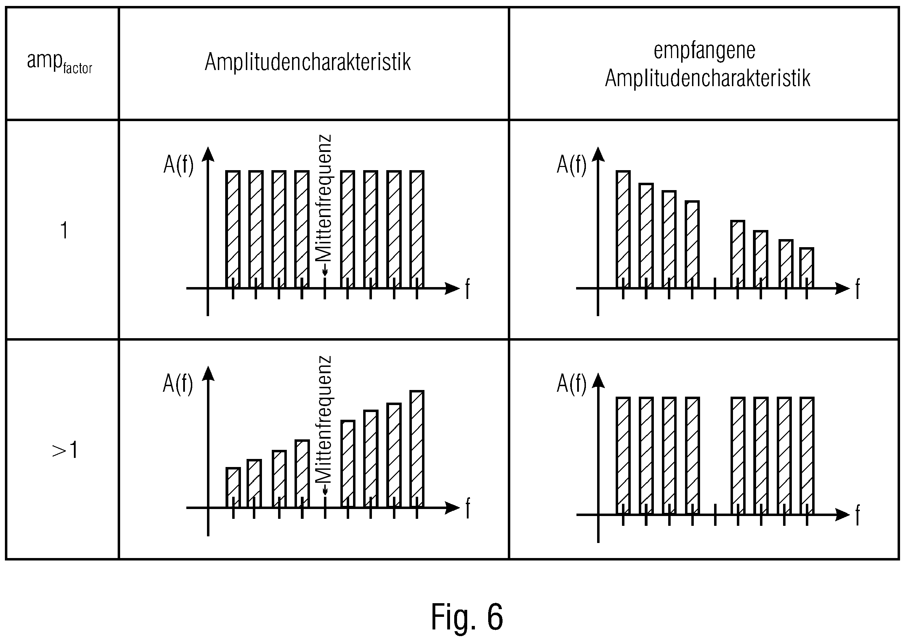

Insbesondere zeigt Fig. 5 die Situation, bei der eine Anzahl von vier Trägern, die mit 502 bezeichnet ist, unterhalb der Mittenfrequenz angeordnet ist, und eine Anzahl von vier Trägern, die mit 504 bezeichnet ist, oberhalb der Mittenfrequenz angeordnet ist. Für eine Optimierung des Signal/Rauschverhältnisses können je nach Implementierung die Amplituden unterschiedlich gesetzt werden, um eine zu erwartende Kanaldämpfung auszugleichen, wie es insbesondere noch im Hinblick auf die untere Darstellung in Fig. 6 erläutert wird. Durch eine nachgeschaltete Optimierung der Phasenlage der einzelnen Träger wird die Genauigkeit der Messwerte dahin gehend erzielt, dass das Sende- sowie das Empfangssignal einen geringen Crest-Faktor hat, der sich dann vorteilhaft auf die Auflösung auswirkt. Insbesondere umfasst das Sendesignal die konfigurierbare Anzahl von Trägern und es ist ferner eine Konfiguration unterschiedlicher Amplituden einsetzbar, wobei eine Optimierung der Phasen für die Reduktion des Crest-Faktors bevorzugt wird.

Die letztendlich erreichte Auflösung im Frequenzbereich kann durch das synchrone Verändern der Mittenfrequenzen bzw. LO-Frequenzen am Sender und Empfänger deutlich gesteigert werden.

Fig. 5 zeigt insbesondere eine Anpassung der Amplitudencharakteristika an die Kanaleigenschaft, dahin gehend, dass mit steigenden Frequenzen die Amplituden des Sendesignals, welche in Fig. 5 dargestellt sind, ansteigen. Dies bedeutet, dass der Träger bei der geringsten Frequenz, also links bei den Trägern 502 unter der Mittenfrequenz die kleinste Amplitude hat und der Träger bei der höchsten Frequenz, also rechts bei den Trägern oberhalb der Mittenfrequenz die höchste Amplitude hat.

Die Ermittlung der Gruppenlaufzeit-Verzerrungen in der Übertragungsfunktion ist für die angestrebte Maximierung der Datenrate nötig. Das Hauptanwendungsgebiet ist hier das Auffinden und genaue Charakterisieren von Resonanzfrequenzen, Notches oder anderen schmalbandigen Effekten innerhalb des zu verwendenden Übertragungsbereichs. Ein wesentlicher Vorteil der vorliegenden Erfindung besteht darin, dass keine Phasensynchronisation zwischen Sender und Empfänger nötig ist. Darüber hinaus ist lediglich eine Übermittlung von Phaseninformationen über das Sendesignal vom Sender zum Empfänger über einen Seitenkanal bei speziellen Ausführungsbeispielen erforderlich. Diese Übermittlung kann jedoch auch nicht vorgenommen werden. In diesem Fall ist der Empfänger ausgebildet, um die Sende-Phasen zu schätzen, oder dieselben sind von vorneherein fest zwischen Sender und Empfänger pro Trägerfrequenz vereinbart. Zur Schätzung genügt es, dass der Sender lediglich grobe Anhaltspunkte für die Sende-Phasen hat, wenn die Sende-Phasen in einem bestimmten Phasen-Raster gewählt werden. Vorzugsweise werden die Phasen dahin gehend gewählt, dass eine Phase eines Trägersignals bei einer bestimmten Frequenz auf einen zufällig ermittelten Wert, der +90 Grad oder -90 Grad sein kann, eingestellt wird. Die Phase des frequenzmäßig angrenzenden Trägers wird dann gleich der Phase des vorigen Trägers plus wieder einer Zufallsphase, die entweder 90 Grad oder -90 Grad ist, eingestellt. Das bedeutet, dass die Phasen zwischen aufeinanderfolgenden Trägern immer um einen Betrag von 90 Grad unterschiedlich sind. Andere Phaseneinstellungen, die nicht aufgrund einer Zufallszahl arbeiten, sondern z. B. 90 Grad, 180 Grad, -90 Grad, 0 Grad, etc. in frequenzmäßig aufsteigender Reihenfolge betragen, sind ebenfalls verwendbar.

Vorzugsweise kann für eine Steigerung der Genauigkeit der Messung in einer weiteren Stufe eine Frequenzsynchronisation von Sender und Empfänger eingesetzt werden. Ferner kann je nach Implementierung in einer weiteren Stufe zur weiteren Steigerung der Genauigkeit eine Phasensynchronisation von Sender und Empfänger eingesetzt werden. Sowohl die Frequenzsynchronisation als auch die Phasensynchronisation sind optionale Schritte, die typischerweise einen relativ hohen Aufwand betreffen. Bereits ohne eine solche Frequenzsynchronisation bzw. Phasensynchronisation werden jedoch bereits sehr effizient und sehr genau Gruppenlaufzeiten und Dämpfungswerte über der Frequenz erhalten.

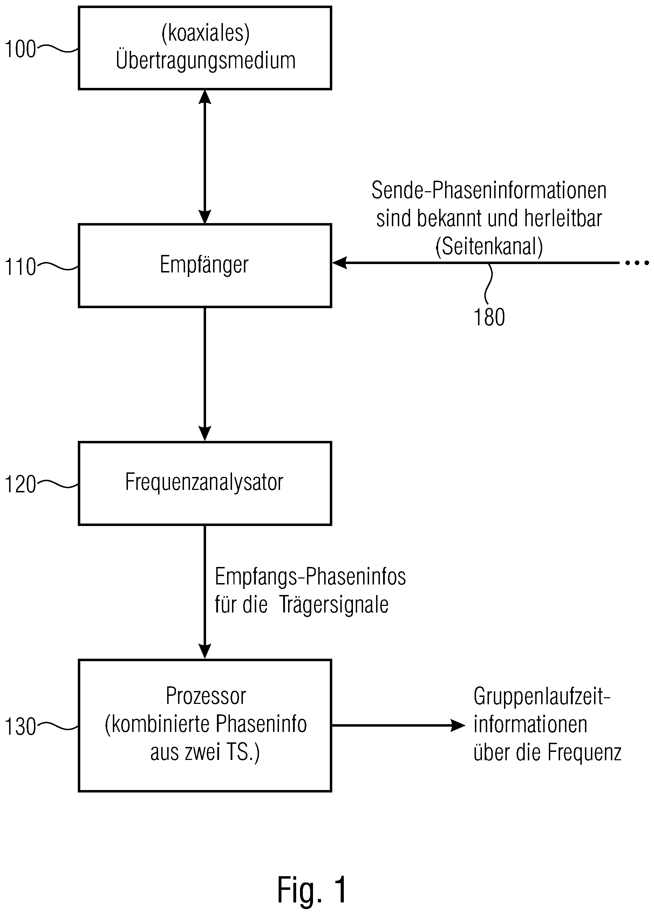

Fig. 1 zeigt eine Vorrichtung zum Erfassen von Gruppenlaufzeitinformationen über der Frequenz für ein z. B.

drahtgebundenes Übertragungsmedium 100. Das Übertragungsmedium ist bei bevorzugten Ausführungsbeispielen ein koaxiales Übertragungsmedium und insbesondere eine bereits existierende koaxiale Übertragungsstruktur, wie beispielsweise eine koaxiale Übertragungsstruktur für den Fernseh-Kabelempfang. Alternative Übertragungsmedien, wie beispielsweise Zweidrahtleitungen, nicht-koaxiale z. B. Kupferleitungen oder auch drahtlose Übertragungsmedien können ebenfalls mit der erfindungsgemäßen Vorrichtung vermessen werden.

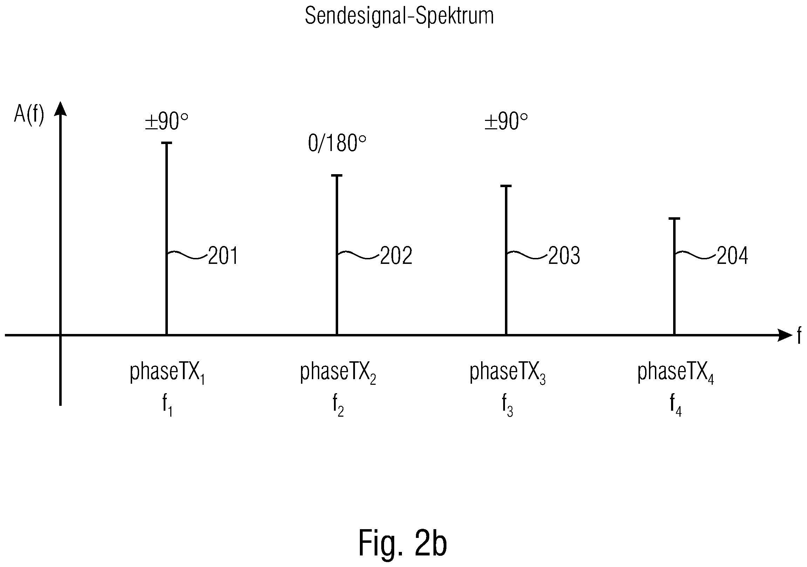

Die Vorrichtung umfasst einen Empfänger 110 zum Empfangen eines Messsignals, um ein Empfangssignal zu liefern, wobei das Messsignal zumindest ein erstes Trägersignal 301 von Fig. 2b bei einer ersten Trägerfrequenz $f_1$, ein zweites Trägersignal 202 bei einer zweiten Trägerfrequenz $f_2$ und ein drittes Trägersignal 203 bei einer dritten Trägerfrequenz $f_3$ aufweist, wobei Sende-Phaseninformationen über die Trägersignale bekannt sind oder herleitbar sind. Insbesondere sind die Sende-Phaseninformationen vorzugsweise bei einem Einspeisen des Messsignals in das Übertragungsmedium 100 bekannt oder herleitbar.

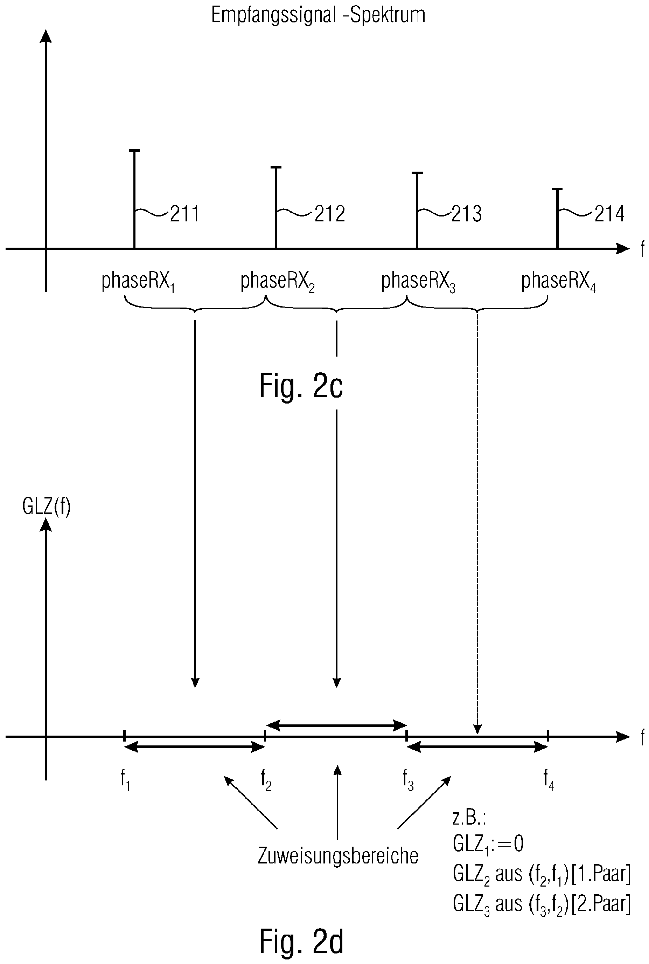

Fig. 2b zeigt ein Spektrum des Sendesignals mit den Trägersignalen 201, 202, 203 bei den Trägerfrequenzen $f_1$, $f_2$, $f_3$, wobei ferner in Fig. 2b ein viertes Trägersignal 204 bei einer vierten Trägerfrequenz $f_4$ gezeigt ist. Fig. 2b zeigt das Sendesignal-Spektrum bzw. das Spektrum des Messsignals, das dann, wenn es beim Empfänger ankommt, wenn es also zum Empfangssignal geworden ist, das Spektrum hat, wie es in Fig. 2c gezeigt ist. Das Empfangssignal-Spektrum wird wieder ein erstes Trägersignal 211, ein zweites Trägersignal 212, ein drittes Trägersignal 213 und ein viertes Trägersignal 214 haben, welche wiederum bei den Frequenzen $f_2$, $f_3$ und $f_4$ sein werden. Allerdings sind die Phasen des Empfangssignal-Spektrums und insbesondere der Trägersignale im Empfangssignal-Spektrum von den Sende-Phasen unterschiedlich. Dasselbe gilt auch für die Amplituden, die aufgrund der Kabeldämpfung in Fig. 2c kleiner eingezeichnet sind als in Fig. 2b.

Die Vorrichtung zum Erfassen umfasst ferner einen Frequenzanalysator 120 zum Analysieren des Empfangssignals, also des Signals, dessen Spektrum in Fig. 2c dargestellt ist, um Empfangs-Phaseninformationen über das erste Trägersignal, das zweite Trägersignal und das dritte Trägersignal zu erhalten. Der Frequenzanalysator liefert daher bei einem bevorzugten Ausführungsbeispiel mittels einer Fourier-Transformation und vorzugsweise mittels einer diskreten Fourier-Transformation (DFT) die Empfangs-Phasen phaseRX$_1$, phaseRX$_2$, phaseRX$_3$ und auch phaseRX$_4$ für die Trägersignale 211 bis 214 von Fig. 2c. Die Vorrichtung umfasst ferner einen Prozessor zum Bilden einer ersten kombinierten Phaseninformation aus den Empfangs-Phaseninformationen von einem ersten Paar von Trägersignalen und zum Bilden einer zweiten kombinierten Phaseninformation aus den Empfangs-Phaseninformationen aus einem zweiten Paar von Trägersignalen, das von dem ersten Paar von Trägersignalen unterschiedlich ist.

Das erste Paar von Trägersignalen ist beispielsweise das Trägersignal 211 und 212 und das zweite Paar von Trägersignalen umfasst beispielsweise das Trägersignal 212 und das Trägersignal 213. Alternativ könnte das zweite Paar von Trägersignalen jedoch auch das Trägersignal 211 und das Trägersignal 213 umfassen. Es wird jedoch bevorzugt, dass die Paare, aus denen die kombinierten Phaseninformationen berechnet werden, frequenzmäßig aneinander angrenzende Paare von Trägersignalen sind. Aus der ersten kombinierten Phaseninformation wird durch den Prozessor 130 eine erste Gruppenlaufzeitinformation gebildet. Ferner ist der Prozessor 130 ausgebildet, um aus der zweiten kombinierten Phaseninformation und den Sende-Phaseninformationen des entsprechenden zweiten Paares die zweite Gruppenlaufzeitinformation zu bilden. Damit werden erfindungsgemäß aus wenigstens drei Trägersignalen im Empfangssignal zwei Gruppenlaufzeitinformationen berechnet, die dann durch den Prozessor 130 zu zwei unterschiedlichen Frequenzwerten zugeordnet werden.

Insbesondere ist der Prozessor ausgebildet, um das Zuordnen der ersten Gruppenlaufzeitinformation zu einer ersten Frequenz und das Zuordnen der zweiten Gruppenlaufzeitinformation zu einer zweiten Frequenz durchzuführen, wobei die erste Frequenz von der zweiten Frequenz unterschiedlich ist und ferner von Frequenzen des ersten Paares von Trägersignalen abgeleitet ist. Dasselbe gilt für die zweite Frequenz, die von den Frequenzen des zweiten Paares von Trägersignalen abgeleitet ist. Die erste Frequenz, der die erste Gruppenlaufzeitinformation zugeordnet ist, stammt somit aus einem der Zuweisungsbereiche, wie sie in Fig. 2d dargestellt sind. So kann die erste Gruppenlaufzeitinformation beispielsweise der Frequenz $f_2$ zugeordnet werden, während die zweite Gruppenlaufzeitinformation der Frequenz $f_3$ zugeordnet wird, während die Gruppenlaufzeitinformation für die Frequenz $f_1$ definitionsgemäß gleich null gesetzt wird. Alternative Zuweisungsmöglichkeiten sind jedoch ebenfalls möglich. So kann der Prozessor auch ausgebildet sein, die erste Gruppenlaufzeitinformation der Frequenz $f_1$ zuzuordnen und die zweite Gruppenlaufzeitinformation der Frequenz $f_2$ und eine von einem dritten und einem vierten Trägersignal abgeleitete dritte Gruppenlaufzeitinformation der dritten Trägerfrequenz $f_3$ zuzuordnen.

Wieder alternativ kann auch jede andere Frequenz im Zuweisungsbereich genommen werden, wie beispielsweise die Mitte zwischen $f_1$ und $f_2$ für die erste Gruppenlaufzeitinformation und die Mitte zwischen $f_2$ und $f_3$ für die zweite Gruppenlaufzeitinformation. Aufgrund der bevorzugten Implementierung der vorliegenden Erfindung mit mehreren Trials unter Verwendung verschiedener Lokaloszillatorfrequenzen wird es jedoch bevorzugt, die Gruppenlaufzeitinformation für die unterste Frequenz eines Trials gleich null zu setzen. Damit wird insbesondere aufgrund eines Überlappungsbereichs zwischen zwei Frequenzausschnitten dennoch erreicht, dass dann immer für jeden Frequenzwert wenigstens eine Gruppenlaufzeitinformation berechnet wird, wenn der Überlappungsbereich lediglich eine Frequenzschnittstelle umfasst. Vorzugsweise beträgt der Überlappungsbereich jedoch mehrere Frequenzschnittstellen, wie beispielsweise 10 oder mehr, so dass aufgrund des Zu-Null-Setzens der Gruppenlaufzeitinformation für die niedrigste Frequenz eines Frequenzabschnitts dennoch ein Überlappungsbereich mit z. B. 9 Frequenzschnittstellen verbleibt, die jeweils zwei verschiedene Gruppenlaufzeitinformationen umfassen, aus denen dann die nachfolgend noch erörterten Korrekturwerte berechnet werden können.

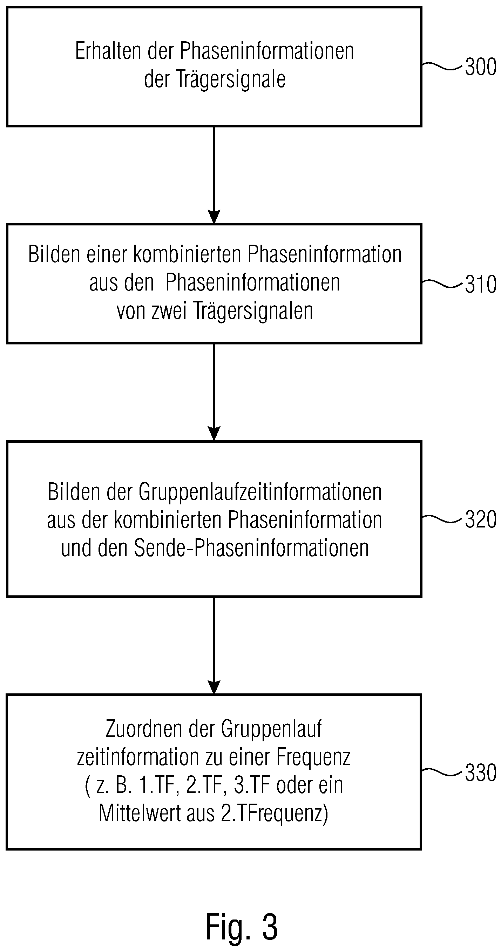

Der Prozessor ist daher ausgebildet, wie es in Fig. 3 dargestellt ist, indem er in einem Schritt 300 die Phaseninformationen der Trägersignale erhält, wie es durch den Frequenzanalysator 120 dargestellt worden ist. Das Ergebnis des Schritts 300 sind daher die Phasenwerte $phaseRX_1$, $phaseRX_2$, $phaseRX_3$ und $phaseRX_4$. In einem Schritt 310 wird eine kombinierte Phaseninformation jeweils aus einem Paar von Trägersignalen gebildet. In einem Schritt 320 wird dann die Gruppenlaufzeitinformation jeweils aus einem Paar von Phaseninformationen und den dazugehörigen Sende-Phaseninformationen, die als Phasenwerte $phaseTX_1$, $phaseTX_2$, $phaseTX_3$ und $phaseTX_4$ in Fig. 2b bezeichnet sind, gebildet. In einem Schritt 330 werden dann die Gruppenlaufzeitinformationen eines Paares zu jeweils einer Frequenz zugeordnet, wie es anhand von Fig. 2d dargestellt worden ist.,

Der Frequenzanalysator 120 ist ausgebildet, um einen Empfangs-Phasenwert $phaseTX_1$ für das erste Träger-signal und einen zweiten Empfangs-Phasenwert $phaseTX_2$ für das zweite Trägersignal zu erhalten. Darüber hinaus ist der Frequenzanalysator 120 ausgebildet, um einen dritten Empfangs-Phasenwert für das dritte Trägersignal zu erhalten. Ferner sind die Sende-Phaseninformationen entweder als absolute Phaseninformationen gegeben oder bereits als eine erste Sende-Differenz zwischen dem ersten Trägersignal und dem zweiten Trägersignal und als eine zweite Sende-Differenz zwischen dem zweiten Trägersignal und dem dritten Trägersignal gegeben.

Darüber hinaus ist der Prozessor 130 ausgebildet, um als die erste kombinierte Phaseninformation eine erste Empfangs-Differenz aus dem ersten Empfangsphasenwert und dem zweiten Empfangsphasenwert zu berechnen, und um ferner als die zweite kombinierte Phaseninformation eine zweite Empfangsdifferenz aus der zweiten Empfangs-Phaseninformation und der dritten Empfangs-Phaseninformation zu berechnen. Der Prozessor ist ferner ausgebildet, um die Gruppenlaufzeitinformation aus der ersten Empfangs-Differenz und der ersten Sende-Differenz zu berechnen und der ersten Frequenz zuzuweisen, und zwar in dem Zuweisungsbereich von Fig. 2d. Darüber hinaus ist der Prozessor ausgebildet, um die zweite Gruppenlaufzeitinformation aus der zweiten Empfangs-Differenz und der zweiten Sende-Differenz zu berechnen und der zweiten Frequenz in dem entsprechenden Zuweisungsbereich zwischen $f_2$ und $f_3$ zuzuweisen.

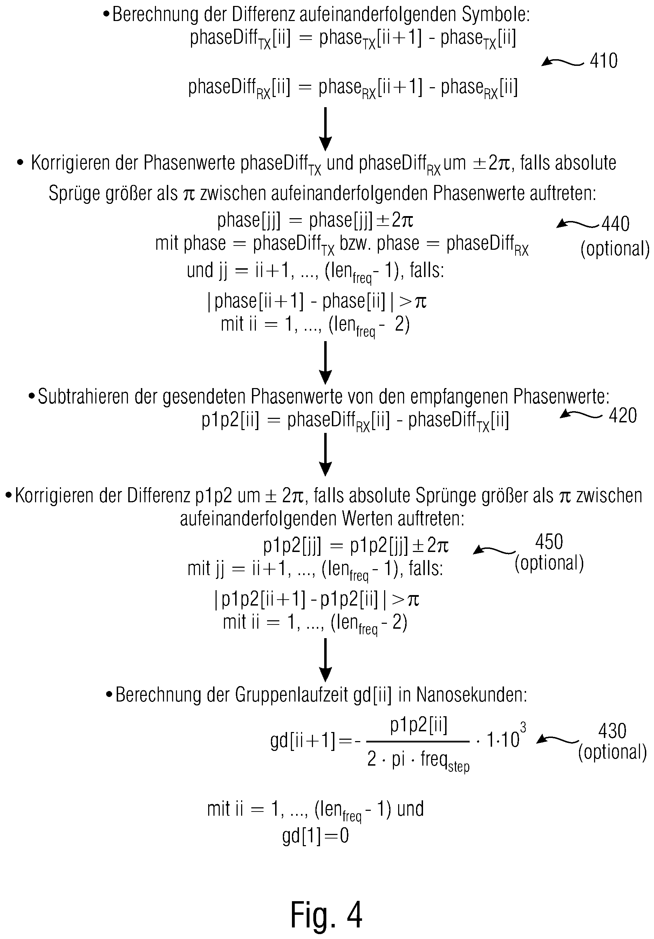

Der Schritt des Berechnens der Sende-Differenz, die auch als $phaseDiff_{TX}$ bezeichnet wird, und der Schritt des Berechnens der Empfangs-Differenz, die auch als $phaseDiff_{RX}$ berechnet wird, ist bei 410 in Fig. 4 gleichungsmäßig dargestellt.

$phaseDiff_{RX}$ stellt die erste kombinierte Phaseninformation dar, wenn ii gleich 1 ist und ii+1 gleich 2 ist. Die zweite kombinierte Phaseninformation wird erhalten, wenn ii gleich 2 und ii+1 gleich 3 ist. Die Sende-Empfangs-Phasendifferenz wird in einem Schritt 420 berechnet, und zwar aus der ersten Empfangs-Differenz und der ersten Sende-Differenz. Diese Werte, die als p1, p2 bezeichnet werden, werden für jedes Paar aus Sende-Empfangs-Phasendifferenz und Empfangs-Differenz berechnet, wie es in Schritt 420 dargestellt ist.

Vorzugsweise wird eine optionale Phasenkorrektur durchgeführt, indem die Sende-Differenz bzw. die Empfangs-Differenz korrigiert wird, falls absolute Phasensprünge größer als $\pi$ zwischen aufeinanderfolgenden Phasenwerten auftreten. Dann wird zur entsprechenden Phase entweder $2\pi$ hinzuaddiert oder $2\pi$ subtrahiert, wie es bei 440 in Fig. 4 gezeigt ist. Die Phasenschwelle, die dafür verantwortlich ist, beträgt 180 Grad oder $\pi$, wobei jedoch je nach Implementierung auch andere Phasenschwellen eingesetzt werden können. Durch die Phasenkorrektur 440 wird jedoch ein Phasen-Unwrap erreicht.

Eine weitere Korrektur, falls absolute Sprünge größer als $\pi$ zwischen aufeinanderfolgenden Werten auftreten, ist in Schritt 450 dargestellt, der ebenfalls vorzugsweise optional eingesetzt wird. Insbesondere wird durch den Schritt 420 durch den Prozessor eine unkorrigierte Gruppenlaufzeitinformation aus der ersten Empfangs-Differenz und der ersten Sende-Differenz berechnet. Ferner ist der Prozessor ausgebildet, um eine unkorrigierte zweite Gruppenlaufzeitinformation aus der zweiten Empfangs-Differenz und der zweiten Sende-Differenz zu berechnen. Ferner wird eine Korrektur vorgenommen, falls eine Differenz der unkorrigierten ersten Gruppenlaufzeitinformation und der unkorrigierten zweiten Gruppenlaufzeitinformation größer als eine Korrekturschwelle ist. Die Korrekturschwelle beträgt 180 Grad oder $\pi$ für einen absoluten Phasensprung.

Dann wird in einem Schritt 430 eine Umrechnung der vorzugsweise korrigierten Gruppenlaufzeitinformation in einen Zeitwert vorgenommen, und zwar in einen Zeitwert in Nanosekunden, wie es durch den Faktor $10^3$ in Fig. 4 dargestellt ist, der berücksichtigt, dass die Variable $freq_{step}$ in Megahertz gegeben ist. Die einzelnen Variablen $len_{freq}$ sowie $freq_{step}$ werden nachfolgend noch erläutert.

Vorzugsweise ist der Empfänger 110 ausgebildet, um die Sende-Phaseninformationen, wie sie anhand von Fig. 2b erläutert worden sind, durch Empfangen von Seiteninformationen über die Sende-Phaseninformationen zu ermitteln, wie es bei 180 in Fig. 1 dargestellt, ist, wobei 180 den Seiteninformationenkanal darstellen soll. Alternativ ist der Empfänger 110 ausgebildet, um unter Verwendung einer Kenntnis über erlaubte Phasenwerte der Sende-Phaseninformationen die Sende-Phaseninformationen am Empfänger zu bestimmen. Insbesondere wird vorzugsweise die Vieldeutigkeit, die aufgrund der Korrekturen im Schritt 440 und 450 eliminiert werden, dazu eingesetzt, um eine Phasenwertschätzung durchzuführen.

Vorzugsweise betragen die Sende-Phaseninformationen für einen Träger der drei Trägerfrequenzen +90 Grad oder -90 Grad und für einen anderen Träger der drei Trägerfrequenzen 0 Grad oder 180 Grad. Damit wird sichergestellt, dass ein niedriger Crest-Faktor des gesamten Sendesignals erhalten wird, was insbesondere dann eine umso größere Rolle spielt, je mehr Träger im Sendesignal enthalten sind. Die Reduzierung des Crest-Faktors wird ferner insbesondere auch dadurch erreicht, dass immer eine Zufallsauswahl-Variante entweder bei jeder Phasenbestimmung des Sendesignals oder bei wenigstens jeder zweiten oder jeder dritten Phasenbestimmung des Sendesignals enthalten ist. Insbesondere dann, wenn die Phasen auf +90 Grad oder -90 Grad und 0 Grad oder 180 Grad für jeweils aufeinanderfolgende Frequenzwerte eingestellt werden, beträgt die Phasenschwelle im Schritt 440 und beträgt die Korrekturschwelle im Schritt 450 jeweils 180 Grad oder $\pi$. Vorzugsweise beträgt die Anzahl von Trägersignalen in dem Messsignal wenigstens 30, wobei die 30 Trägersignale jeweils 30 verschiedenen Trägerfrequenzen zugeordnet sind, die über einen Trägerfrequenzabstand frequenzmäßig beabstandet sind. Insbesondere ist der Frequenzanalysator 120 ausgebildet, um für jedes Trägersignal als Empfangs-Phaseninformation einen Phasenwert zu berechnen. Ferner ist der Prozessor 130 ausgebildet, um die Gruppenlaufzeitinformationen für jede Trägerfrequenz außer einer Trägerfrequenz zu bestimmen, so dass für eine Anzahl von n empfangenen Trägerfrequenzen eine Anzahl (n-1) Gruppenlaufzeitinformationen bestimmt wird, die einer Anzahl n-1 Frequenzen zugewiesen werden. Ferner ist der Frequenzanalysator 120 ausgebildet, um für die Trägersignale jeweils eine Empfangsamplitudeninformation zu bestimmen, wobei der Prozessor 130 ferner ausgebildet ist, um unter Verwendung der Empfangs-Amplitudeninformation einen Dämpfungswert pro Trägerfrequenz zu bestimmen.

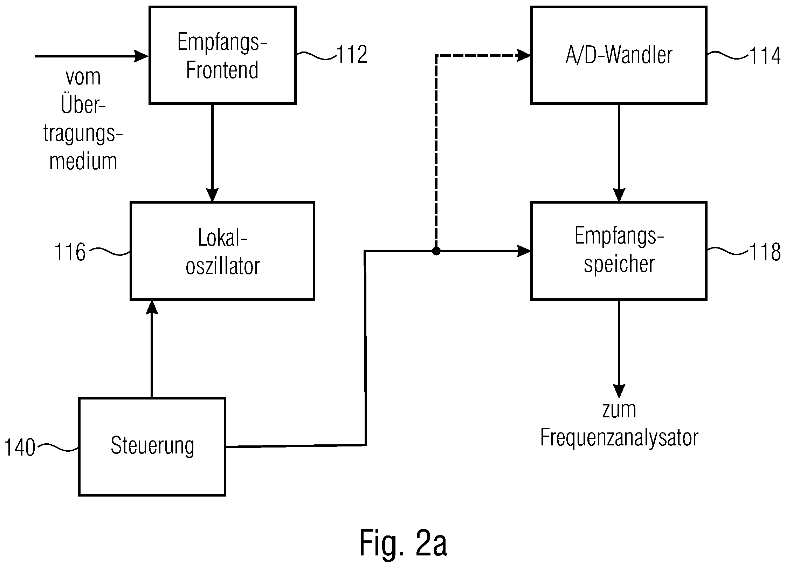

Fig. 2a zeigt eine bevorzuge Ausführungsform des Empfängers 110 von Fig. 1. Der Empfänger umfasst ein Empfangs-Frontend 112, das mit einem steuerbaren Lokaloszillator 116 gekoppelt ist, der von einer Steuerung 140 steuerbar ist. Das Ausgangssignal des Empfangs-Frontend 112 liegt aufgrund der Wirkung des Lokaloszillators 116 bereits im Basisband vor und wird durch einen Analog/Digital-Wandler 114 gewandelt. Das Ausgangssignal des A/D-Wandlers 114 gelangt zu einem Empfangsspeicher 118. Der Empfangsspeicher 118 wird ebenfalls von der Steuerung 140 gesteuert, um einen definierten Bereich des Digitalsignals am Ausgang des A/D-Wandlers 114 aufzuzeichnen, und zwar in zeitlicher Ordnung des Aufzeichnens, um damit den Frequenzanalysator 120 anzusteuern. Je nach Implementierung kann der A/D-Wandler 114 laufend aktiv sein und der Empfangs-Speicher 118 zeichnet lediglich in den von der Steuerung 140 gegebenen Zeitfenstern auf, um jeweils einen "Snapshot" zu erhalten. Alternativ kann auch der A/D-Wandler 114 von der Steuerung 140 gesteuert werden, um nur dann eine Analog/Digital-Wandlung durchzuführen, wenn auch eine Aufzeichnung im Empfangs-Speicher 118 vorgenommen wird. In diesem Fall muss der Empfangs-Speicher 118 nicht extra von der Steuerung gesteuert werden, sondern der A/D-Wandler 114. Alternativ können auch beide Elemente von der Steuerung angesteuert werden.

Bei einem bevorzugten Ausführungsbeispiel der vorliegenden Erfindung ist der Empfänger 110 ausgebildet, um zeitlich nach dem Messsignal eines oder mehrere weitere Messsignale zu erhalten. Ferner ist der Frequenzanalysator 120 ausgebildet, um das eine oder die mehreren weiteren Messsignale zu analysieren. Darüber hinaus ist der Prozessor ausgebildet, um auch für den einen oder die mehreren weiteren Messsignale die Gruppenlaufzeitinformationen über der Frequenz zu bestimmen, so dass für jeden Trägerfrequenzwert aus jedem einzelnen "Snapshot" eine Gruppenlaufzeitinformation erhalten wird. Vorzugsweise ist der Prozessor 130 ausgebildet, um aus den Gruppenlaufzeitinformationen für das Messsignal und das eine oder die mehreren weiteren Messsignale durch Auswahl oder Kombinieren von Gruppenlaufzeitinformationen von verschiedenen Snapshots die Gruppenlaufzeitinformationen für die einzelnen Trägerfrequenzen zu bestimmen.

Je nach Implementierung sind das erste Trägersignal, das zweite Trägersignal und das dritte Trägersignal sinusförmig. Dann ist der Frequenzanalysator ausgebildet, um eine Fourier-Analyse des Messsignals auszuführen. Alternative, vorzugsweise periodische Trägersignale, die sich von Sinussignalen unterscheiden, können ebenfalls verwendet werden. In einem solchen Fall ist die Frequenz-Analyse an andere "Basisfunktionen" als Sinussignale, aus denen das Messsignal aufgebaut ist, anzupassen.

Bei einem bevorzugten Ausführungsbeispiel der vorliegenden Erfindung ist der Empfänger 110 ausgebildet, um unter Verwendung einer ersten Lokaloszillatorfrequenz einen ersten Frequenzausschnitt in das Basisband umzusetzen. Ferner ist der Empfänger 110 ausgebildet, um unter Verwendung einer zweiten Lokaloszillatorfrequenz einen zweiten Frequenzausschnitt in das Basisband umzusetzen. Insbesondere ist der Empfänger ausgebildet, um unter Verwendung eines festgelegten oder über einen Seitenkanal empfangenen Ablaufplans die erste Lokaloszillatorfrequenz und die zweite Lokaloszillatorfrequenz zeitlich versetzt einzustellen. Darüber hinaus werden die erste Lokaloszillatorfrequenz und die zweite Lokaloszillatorfrequenz so eingestellt, dass sich der erste Frequenzausschnitt und der zweite Frequenzausschnitt in einem Überlappungsbereich überlappen, so dass für Trägerfrequenzen in dem Überlappungsbereich jeweils mehrere Gruppenlaufzeitinformationen aus Messungen mit verschiedenen Lokaloszillatorfrequenzen erhalten werden.

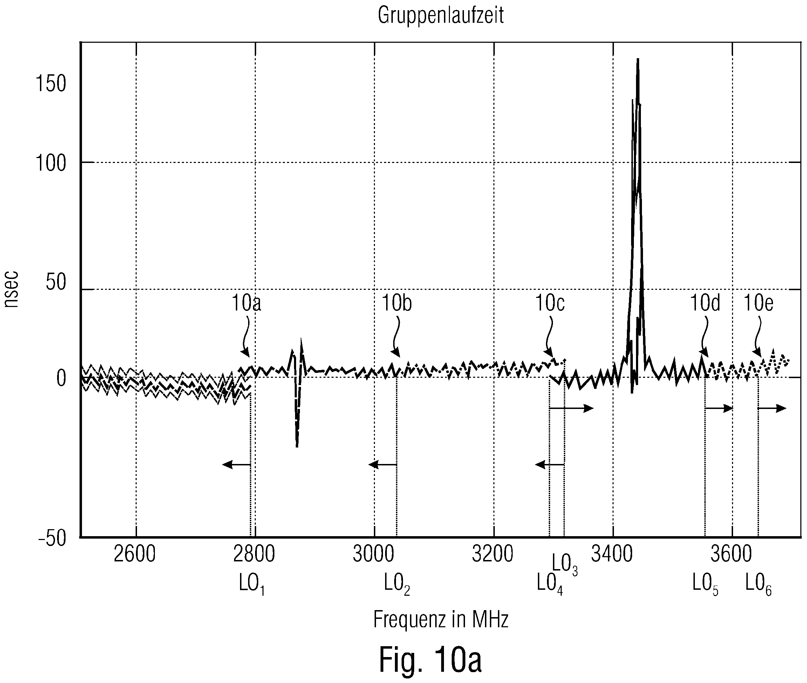

Je nach Implementierung ist der Empfänger ausgebildet, um eine Einseitenbanddemodulation unter Verwendung der ersten Lokaloszillatorfrequenz und der zweiten Lokaloszillatorfrequenz durchzuführen. Fig. 10a zeigt verschiedene Lokaloszillatorfrequenzen $LO_1$, $LO_2$, $LO_3$, $LO_4$, $LO_5$ und $LO_6$. Darüber hinaus ist dargestellt, dass bei der Einseitenband-demodulation bei den Lokaloszillatoren $LO_1$, $LO_2$, $LO_3$ jeweils das untere Seitenband verwendet wird, während bei den Lokaloszillatorfrequenzen $LO_4$, $LO_5$, $LO_6$ das obere Seitenband verwendet wird. Darüber hinaus sind bestimmte Überlappungsbereiche 10a, 10b, 10c, 10d, 10e in Fig. 10a dargestellt. Ferner ist gezeigt, dass beim Überlappungsbereich 10c die dritte Lokaloszillatorfrequenz $LO_3$ frequenzmäßig höher als die vierte Lokaloszillatorfrequenz $LO_4$ ist. Hier ist der Wechsel des für die Demodulation verwendeten einen Seitenbands vom oberen zum unteren Seitenband gezeigt, was aufgrund der entsprechenden Frequenzen und der gut handhabbaren Lokaloszillatoren vorteilhaft ist.

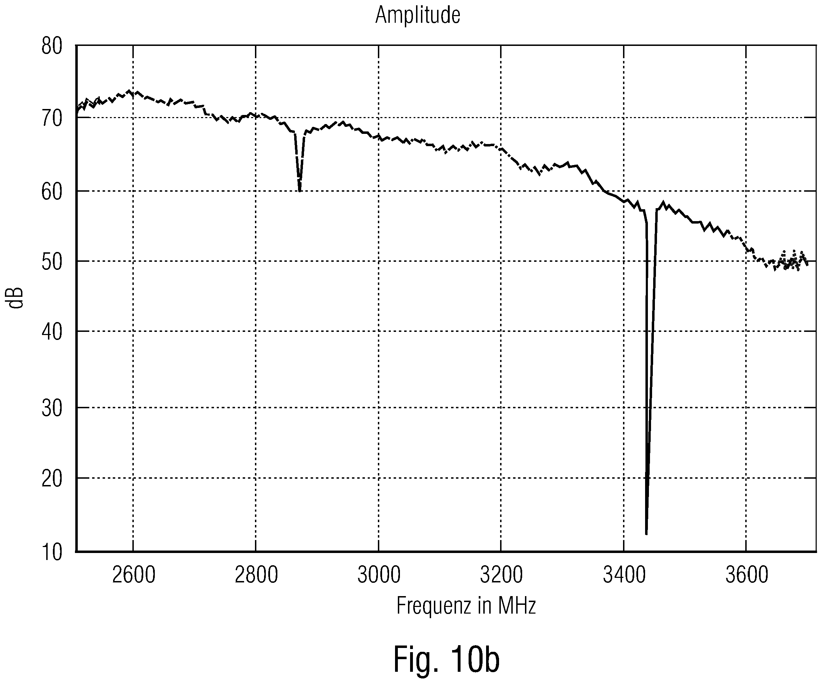

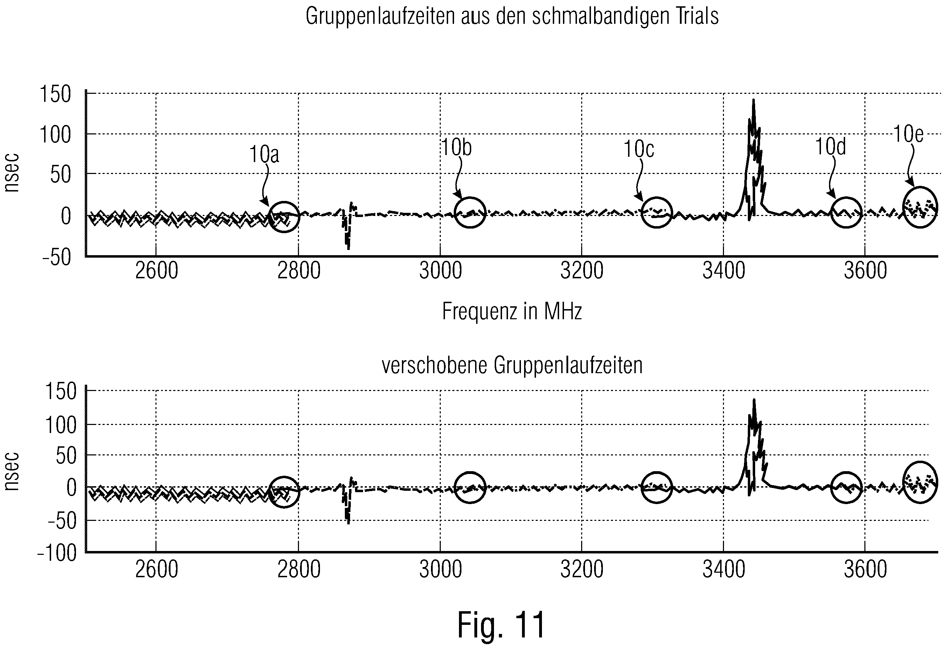

Überlappungsbereiche 10a bis 10e werden ferner verwendet, um die Gruppenlaufzeitinformationen und gegebenenfalls auch die Amplitudeninformationen, wie sie in Fig. 10a bzw. 10b dargestellt sind, jeweils auf ein gleiches Niveau zu bringen, wie es in Fig. 11 illustriert ist und nachfolgend noch erläutert wird. Hierbei ist der Prozessor 130 ausgebildet, um unter Verwendung der Gruppenlaufzeitinformationen für die verschiedenen Lokaloszillatorfrequenzen in einem Überlappungsbereich Gruppenlaufzeitinformationen außerhalb des Überlappungsbereichs für den ersten Frequenzabschnitt und/oder den zweiten Frequenzabschnitt zu modifizieren, um Diskontinuitäten aufgrund der unterschiedlichen Lokaloszillatorfrequenzen zu reduzieren oder zu eliminieren. Insbesondere ist hier der Prozessor 130 ausgebildet, um aus den Gruppenlaufzeitinformationen des ersten Frequenzabschnitts in dem Überlappungsbereich einen ersten Mittelwert zu bilden, und um aus den Gruppenlaufzeitinformationen des zweiten Frequenzabschnitts in dem Überlappungsbereich einen zweiten Mittelwert zu bilden. Ferner wird unter Verwendung des ersten Mittelwerts und des zweiten Mittelwerts ein Korrekturwert berechnet, der dann dazu verwendet wird, um die Gruppenlaufzeitinformationen des ersten Frequenzabschnitts oder des zweiten Frequenzabschnitts zu korrigieren, um korrigierte Gruppenlaufzeitinformationen zu erhalten. Die Korrektur ist je nach Implementierung eine Kombination zwischen dem Korrekturwert und den jeweiligen Gruppenlaufzeitinformationen, wie beispielsweise eine Addition oder Subtraktion.

Insbesondere ist der Prozessor 130 hierbei ausgebildet, um vor der Berechnung des ersten oder zweiten Mittelwerts Ausreißer zu eliminieren, wobei dies vorzugsweise unter Verwendung einer kumulativen Verteilungsfunktion mit einem maximalen und einem minimalen Quantile durchgeführt wird.

Je nach Implementierung wird nicht nur ein Überlappungsbereich 10a, sondern mehrere, wie beispielsweise 5 Überlappungsbereiche, die in Fig. 10a illustriert sind, eingestellt. Hierbei ist der Prozessor 130 ausgebildet, um die Gruppenlaufzeitinformationen für einen dritten Frequenzabschnitt zu berechnen, der mit dem zweiten Frequenzabschnitt in einem zweiten Überlappungsbereich überlappt, zu berechnen. Insbesondere ist der Prozessor 130 ferner ausgebildet, um für eine Berechnung eines Korrekturwerts für den dritten Frequenzabschnitt neben Mittelwerten in dem dritten Überlappungsbereich einen Korrekturwert aus dem Überlappungsbereich zwischen dem ersten Frequenzabschnitt und dem zweiten Frequenzabschnitt zu verwenden, so dass sich Korrekturwerte gewissermaßen über den gesamten Frequenzbereich "fortpflanzen" bzw. der Korrekturwert des höchstens Frequenzabschnitts bezüglich der Frequenz aus den Korrekturwerten der Frequenzabschnitte mit niedriger Frequenz zusätzlich zu den jeweiligen Mittelwerten berechnet wird.

Bei bevorzugten Ausführungsbeispielen der vorliegenden Erfindung ist der Prozessor 130 ferner ausgebildet, um unter Verwendung der Gruppenlaufzeitinformationen Steuerinformationen für einen Sender für das Übertragungsmedium zu ermitteln, um eine gewünschte Übertragungsrate und/oder eine gewünschte maximale Fehlerrate bei einer Übertragung über das Übertragungsmedium zu erreichen. Wie es dargelegt worden ist, ist das Übertragungsmedium vorzugsweise ein koaxiales Übertragungsmedium und insbesondere eine bereits bestehende koaxiale Infrastruktur, bei der eine Bandbreite des Empfangssignals zwischen 50 MHz und 500 MHz ist und ein Messbereich der koaxialen Infrastruktur zwischen 1000 und 5000 MHz liegt.

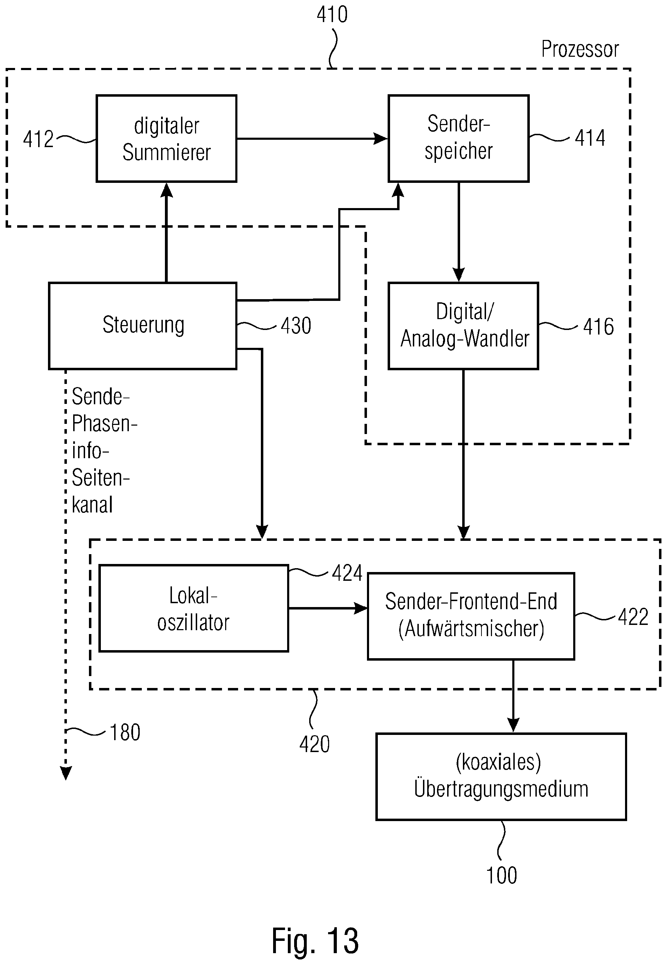

Fig. 13 zeigt eine Vorrichtung zum Senden eines Messsignals über ein Übertragungsmedium, das in Fig. 13 wieder als (koaxiales) Übertragungsmedium 100 dargestellt ist. Die Vorrichtung zum Senden umfasst einen Prozessor 410 zum Erzeugen des Messsignals, das in Fig. 2b dargestellt ist und ein erstes Trägersignal 201 bei einer ersten Trägerfrequenz $f_1$, ein zweites Trägersignal 202 bei einer zweiten Trägerfrequenz $f_2$ und ein drittes Trägersignal 203 bei einer dritten Trägerfrequenz $f_3$ aufweist. Das Messsignal wird in einen Sender 420 übergeben, der ausgebildet ist, um das Messsignal in das Übertragungsmedium 100 einzuspeisen.

Der Prozessor 410 umfasst je nach Implementierung einen digitalen Summierer 412, einen Senderspeicher 414 und einen Digital/Analog-Wandler 416. Ferner umfasst die Vorrichtung zum Senden vorzugsweise eine Steuerung 430, die über den Seitenkanal 180 Sende-Phaseninformationen an den Empfänger 110 von Fig. 1, also von der Vorrichtung zum Erfassen der Gruppenlaufzeitinformationen übermitteln kann.

Darüber hinaus umfasst der Sender bei einem bevorzugten Ausführungsbeispiel der vorliegenden Erfindung einen Lokaloszillator 424, der von der Steuerung 430 ansteuerbar ist, sowie ein Sender-Frontend 422, das insbesondere einen Aufwärtsmischer umfasst. Der Prozessor 410 ist ausgebildet, um das Messsignal in einem Basisband zu erzeugen, und der Sender 420 ist ausgebildet, um unter Verwendung des Lokaloszillators 424 das Messsignal vom Basisband in ein Übertragungsband umzusetzen, das höherfrequenter als das Basisband ist. Ferner ist der Prozessor 410 ausgebildet, um das Messsignal durch digitales Aufsummieren mittels des digitalen Summierers 412 unter Verwendung von sinusförmigen Trägersignalen bei den einzelnen Trägerfrequenzen zu erzeugen, wobei die sinusförmigen Trägersignale definierte Phasen zueinander haben, welche die Sende-Phaseninformationen darstellen. Das digitale Signal wird dann in einem Senderspeicher 414 gespeichert und vom Digital/Analog-Wandler 416 in eine analoge Form umgesetzt. Insbesondere ist der Prozessor 410 ferner ausgebildet, um das Messsignal unter Verwendung des digitalen Summierers 412 gesteuert durch die Steuerung 430 zyklisch zu erzeugen, also als zyklisches Signal zu erzeugen, das eine bestimmte Länge in digitalen Samples hat, und das so ausgebildet ist, dass keine Diskontinuitäten entstehen, wenn der Anfang des zyklischen Messsignals wieder an das Ende des zyklischen Messsignals "angestückelt" wird.

Das zyklische Messsignal, das vom digitalen Summierer 412 erzeugt worden ist, wird in dem Senderspeicher 414 gespeichert und nacheinander eine definierte Anzahl von Malen an den Digital/Analog-Wandler 416 übermittelt, so dass ein Basisbandsignal am Ausgang des Digital/Analog-Wandlers in der digitalen Domäne erhalten wird, das eine Folge von analogen Versionen des Messsignals aufweist. Der Sender ist ferner ausgebildet, um das Basisbandsignal mit dem Lokaloszillator 424 in ein Übertragungsband umzusetzen und in das Übertragungsmedium 100 einzuspeisen. Der Lokaloszillator 424 wird, zum Erzeugen des Sendesignals in den verschiedenen Frequenzabschnitten, vorzugsweise genauso gesteuert wie der Lokaloszillator des Empfängers, der eine entsprechende Abwärtsmischung vornimmt. Darüber hinaus ist das Sender-Frontend 422 ausgebildet, um eine Einseitenbandmodulation durchzuführen, um die entsprechenden Sendesignale zu erhalten, die dann, an Empfängerseite die entsprechenden Frequenzbereiche, wie sie in Fig. 10a mit den Überlappungsbereichen 10a bis 10e dargestellt sind, ergeben.

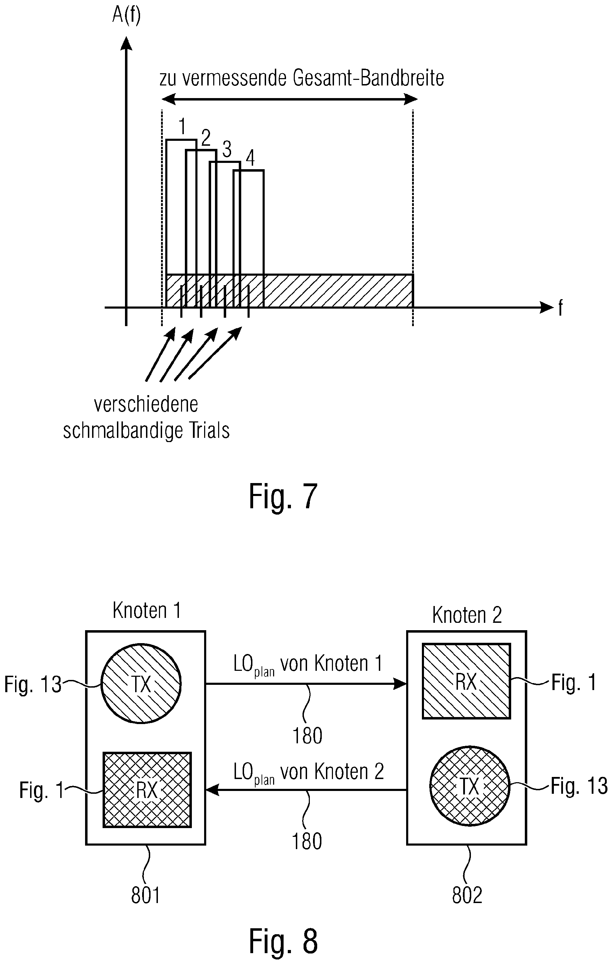

Nachfolgend wird anhand der Fig. 8 bis 13 eine bevorzugte Implementierung der vorliegenden Erfindung dargestellt. Vorzugsweise erzeugt der in Fig. 13 dargestellte Sender ein Messsignal, das eine spezielle Verteilung der Amplituden- und Phaseninformationen hat, sowie eine Zyklizität. Die Messung und Auswertung selbst erfolgt durch das Aussenden und Empfangen dieses Messsignals, das eine Phasenverteilung hat, damit ein gutes Messsignal im Hinblick auf den optimierten Crest-Faktor erhalten wird. Insbesondere ist das Signal im Zeitbereich vorzugsweise vollkommen zyklisch, um einen beliebigen Abtastzeitpunkt am Empfänger zu ermöglichen. Aus zwei Trägern wird die Referenzphase bestimmt. Ab dem dritten Träger wird dann unter Berücksichtigung der Referenzphase die Gruppenlaufzeit berechnet. Die durch den Messaufbau vorgegebene feste Auflösung im Frequenzbereich kann durch das synchrone Verändern der Mittenfrequenz an Sender und Empfänger gesteigert werden. Vorteilhaft ist, dass ohne ein Frequenznormal auf beiden Seiten der Messung diese Art von Messergebnissen erzielt werden kann. Die vorliegende Erfindung kann daher auch als "verteilter Netzwerkanalysator" bezeichnet werden. Insbesondere wird ein Messsignal, und zwar ein zyklisches Messsignal, generiert, das für die Auswertungen, wie sie anhand von Fig. 4 beschrieben worden sind, geeignet ist, wobei jedoch ferner keine Frequenz- und Phasensynchronizität zwischen Empfänger und Sender vorausgesetzt wird, jedoch optional eingesetzt werden kann.

Vorzugsweise wird der Kanal, wie es in Fig. 7 dargestellt ist, durch verschiedene schmalbandige Trials angeregt. Hierbei werden Signalmittenfrequenzen alleine, Signalbandbreiten alleine oder sowohl Mittenfrequenzen als auch Bandbreiten gemeinsam vorzugsweise unterbrechungsfrei so adaptiert, dass mittels dieser Messung der gesamte nutzbare Spektralbereich "kartographiert" werden kann, und zwar im Hinblick auf einen erreichbaren Signal-zu-Rauschabstand und/oder hinsichtlich eines erreichbaren Signal-zu-Interferenzabstand.

Zur Generierung eines Messsignals kann folgendermaßen vorgegangen werden.

Die Messsignale für die einzelnen Trials werden folgendermaßen generiert:

- Die Abtastrate $SAMPLE_{FREQ}$ wird in Abhängigkeit von ADC und DAC gewählt
- Weiterhin sind die folgenden Parameter gegeben:

  ◦ die Bandbreite $BW_{use}$ in MHz
  ◦ die Anzahl der benützten Samples $NUM_{SAMPLES}$
  ◦ der Abstand in Samples zwischen den einzelnen Frequenzen $TX_{SPACING}$

- Aus diesen Parametern werden die benützten Frequenzindizes $freq_{idx}$ berechnet:

$$freq_{step} = \frac{SAMPLE_{FREQ}}{NUM_{SAMPLES}} * TX_{SPACING}$$

$$freq_{idx} = TX_{SPACING}, 2 * TX_{SPACING}, ..., \left\lfloor \frac{|BW_{use}|}{freq_{step}} \right\rfloor * TX_{SPACING}$$

$$len_{freq} = length(freq_{idx})$$

Man benötigt mindestens 3 Träger pro Aufnahme, um die Gruppenlaufzeit berechnen zu können (siehe Kapitel 2.5).
• Daraus ergeben sich die Frequenzen $freq_{MHz}$:

$$freq_{MHz} = freq_{idx} * \frac{SAMPLE_{FREQ}}{NUM_{SAMPLES}}$$

• Berechnung der Amplituden $amp[idx]$:

$$amp[idx] = (freq_{idx}[idx] - \min(freq_{idx})) * \frac{amp_{factor} - 1}{\max(freq_{idx}) - \min(freq_{idx})} + 1,$$

wobei $idx$ = 1, ..., $len_{freq}$ und $amp_{factor}$ frei gewählt werden kann, damit man die Amplitudencharakteristika von Abb. 1 erhält. Wählt man $amp_{factor}$ = 1, so erhält man:

$$amp[idx] = 1.$$

• Berechnung der Phasen $phase[idx]$:

$$phase[0] = random(90, -90)$$

$$phase[idx] = phase[idx] + random(90, -90)$$

wobei $idx$ = 1, ..., $len_{freq}$ und $random$(90, -90) entweder 90 oder -90 zufällig gewählt ist.
• Aus den Amplitudenwerten $amp[idx]$ und $phase[idx]$ ergibt sich für die DAC-Samples $dac_{val}[ii]$:

$$dac_{val}[ii] = \sum_{idx=1}^{len_{freq}} \left( amp[idx] * \exp\left( 2j * \pi * (ii - 1) * \frac{freq_{idx}[idx]}{NUM_{SAMPLES}} + \left( phase[idx] * \frac{\pi}{180} \right) \right) \right)$$

wobei $ii$ = 1, ..., $NUM_{SAMPLES}$ und $len_{freq}$ = (Länge von $freq_{idx}$).

Der Faktor $amp_{factor}$ > 1 wird gemäß dem Kanal so gewählt, dass das Spektrum des Empfangssignals nicht mehr absteigend ist (siehe Fig. 6).

Mit diesen DAC-Samples werden mehrere Trials nach einem vorher festgelegten Plan $lo_{plan}$ gestartet. Der Plan $lo_{plan}[ii]$ enthält jeweils die Parameter:

• $lo_{freq}$ gibt je nach Parameter $iqinvert$ die Startfrequenz oder die Stopfrequenz an.
• $iqinvert$ gibt an, ob $lo_{freq}$ die Startfrequenz oder die Stopfrequenz ist. $iqinvert$ = True bedeutet, dass $lo_{freq}$ die Startfrequenz ist, während im Falle von $iqinvert$ = False $lo_{freq}$ die Stopfrequenz ist.
• $time_{set}$ gibt die Zeit an, nach wieviel Sekunden nach dem Start der Messung der Plan umgesetzt werden soll.

Für die Erstellung des Planes $lo_{plan}$ [ii] sind folgende Schritte notwendig:

- Setzen der Parameter:

  ◦ Anzahl der Snapshots $NUM_{SNAPSHOTS}$ je Stufe mit gleicher Mittenfrequenz
  ◦ Anzahl der Frequenzen $OVERLAP_{MEASURE}$, die sich am Ende des Frequenzbandes von Plan [ii] mit dem Anfang des Frequenzbandes von Plan [ii + 1] überlappen sollen
  ◦ Zeit $time_{start}$ in Sekunden, die das System zum Starten braucht
  ◦ Zeit $time_{snapshot}$ in Sekunden, die das System für einen Snapshot braucht

- Benötigte Parameter aus der Berechnung des DAC-Signals $dac_{val}$:

  ◦ $freq_{step}$: Abstand zwischen zwei Trägern
  ◦ $len_{freq}$: Anzahl der verwendeten Träger
  ◦ $freq_{max} = \max(freq_{MHz})$

- Berechnen der Mittenfrequenz $center_{freq}$ des zu vermessenden Kanals:

$$center_{freq} = \frac{txlowfreq + txhighfreq}{2},$$

wobei $txlowfreq$ die minimale Frequenz und $txhighfreq$ die maximale Frequenz des zu vermessenden Kanals ist.

- Berechnen der Start- oder Stopfrequenz $lo_{freq}[ii]$ und des Parameters $iqinvert[ii]$:

$$cur_{freq}[ii] = cur_{freq}[ii-1] - OVERLAP_{MEASURE} * freq_{stepping}$$

mit $cur_{freq}[0] = txlowfreq$

$$lo_{above} = cur_{freq}[ii] + freq_{max}$$

$$lo_{below} = cur_{freq}[ii]$$

Falls

$$\left| lo_{above} - center_{freq} \right| \leq \left| lo_{below} - center_{freq} \right| \text{gilt:}$$

$$lo_{freq}[ii] = lo_{above}$$

$$iqinvert[ii] = True,$$

ansonsten gilt:

$$lo_{freq}[ii] = lo_{below}$$

$$iqinvert[ii] = False$$

Mit dieser Bedingung wird erreicht, dass die Mittenfrequenz außerhalb der Trials liegt (siehe Abb. 1 und Tabelle 1).

Diese Routine wird so lange ausgeführt bis die Bedingung $cur_{freq}[ii+1] \geq \left( txhighfreq - \frac{3}{2} * freq_{step} \right)$ erfüllt ist.

- Berechnen der Zeit $time_{set}[ii]$

$$time_{set}[ii] = time_{set}[ii-1] + time_{snapshot} * NUM_{SNAPSHOTS}$$

Für die Frequenzen der Trials gilt mit den Parametern $freq_{MHz}$, $lo_{freq}$ und $iqinvert$ = True:

$$freq_{Trial}[idx] = lo_{freq} - freq_{MHz}[len_{freq} + 1 - idx],$$

mit $idx$ = 1, ..., $len_{freq}$ und $lo_{freq}$ als Stopfrequenz.
Für die Frequenzen $freq_{Trial}[idx]$ der Trials gilt mit den Parametern $freq_{MHz}$, $lo_{freq}$ und $iqinvert$ = False:

$$freq_{Trial}[idx] = lo_{freq} + freq_{MHz}[idx]$$

mit $idx$ = 1, ..., $len_{freq}$ und $lo_{freq}$ als Startfrequenz.

Vorzugsweise wird die Lokaloszillator-Steuerung des Empfänger-seitigen Lokaloszillators 116 einerseits und des Sender-seitigen Lokaloszillators 424 von Fig. 13 andererseits gemäß dem vorstehend beschriebenen LO-Plan vorgenommen.

Es werden beide Richtungen des Kanals gleichzeitig vermessen (siehe Abb. 3). Nach dem Erstellen der Pläne auf beiden Seiten, werden auf beiden Seiten im TX-Fall die Pläne unter Verwendung des DAC-Signals $dac_{val}$ zeitgesteuert mit Hilfe des Parameters $time_{set}$ nacheinander ausgeführt (siehe Fig. 8). Unabhängig davon werden im RX-Fall ebenfalls auf beiden Seiten mit Hilfe der entsprechenden Pläne die empfangenen Signale zeitgesteuert und zeitlich zyklisch, da RX und TX unsynchronisiert sind, abgespeichert.

Fig. 8 illustriert schematisch das gleichzeitige Vermessen des Kanals in beiden Richtungen. Ein erster Knoten 1, der mit 801 bezeichnet ist, und ein zweiter Knoten 2, der mit 802 bezeichnet ist, arbeiten zusammen, wobei über den Seitenkanal 180 der $LO_{plan}$ von Knoten 1 zu Knoten 2 übermittelt wird und der $LO_{plan}$ von Knoten 2 zu Knoten 1 übermittelt wird. Der jeweilige Sender TX entspricht der in Fig. 13 dargestellten Vorrichtung, während der Empfänger RX jeweils der in Fig. 1 dargestellten Vorrichtung mit den jeweiligen beschriebenen bevorzugten Ausführungsbeispielen entspricht.

Aus den empfangenen Signalen werden, nachdem die Aufnahme beendet und alle Pläne durchgelaufen sind, die Gruppenlaufzeit mit Amplituden der einzelnen Snapshots berechnet.

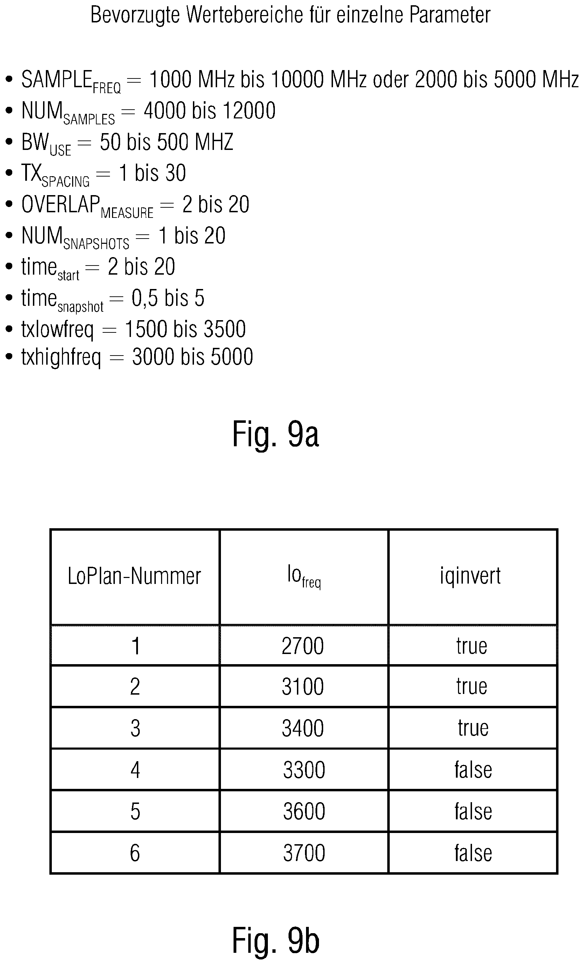

Fig. 9a zeigt bevorzugte Wertebereiche für einzelne vorstehend genannte Parameter. Entsprechend zeigt Fig. 9b ein spezielles Beispiel für verschiedene LO-Frequenzen die entsprechenden LoPlan-Nummern entsprechen mit einem jeweiligen Parameterwert iqinvert. Diese Beispiele entsprechen in etwa den Werten, wie sie z. B. in Fig. 10a, 10b, 11 für die einzelnen Frequenzabschnitte illustriert sind.

Dazu werden die überlappenden Bereiche zweier nebeneinanderliegender Frequenzbänder betrachtet. Aus den Ergebnissen, die sich innerhalb der überlappenden Bereiche befinden, werden zwei Mittelwerte gebildet, und zwar für das Ende des vorderen und für den Anfang des nachfolgenden Frequenzbandes. Um das Ergebnis des Mittelwertes nicht zu verfälschen, werden Ausreißer innerhalb der überlappenden Bereiche für die Mittelwertberechnung entfernt. Die Ausreißer werden mit folgendem Verfahren gefunden:

- Berechnen der CDFs aus den Werten des vorderen Frequenzbandes für alle überlappenden Bereiche
- Berechnen der CDFs aus den Werten des nachfolgenden Frequenzbandes für alle überlappenden Bereiche
- Für alle CDFs werden die Quantilwerte q1 und q3 bei 25% und 75% berechnet
- Als Ausreißer gelten alle Werte, für die gilt:

$$val_i < (q1 - (q3 - q1)) * precision$$

oder

$$val_i > (q1 + (q3 - q1)) * precision,$$

mit $val_i$ = Wert innerhalb eines überlappenden Bereiches, $precision$ = vorgegebener fester Multiplikationswert

Nachdem alle Ausreißer entfernt sind, werden die Mittelwerte aus den übrigen Werten berechnet. Der Korrekturwert *correction$_{j+1}$* für den Bereich (*j* + 1) ergibt sich als Summe aus dem Korrekturwert *correction$_j$* des Bereiches *j*, dem Mittelwert *firstOverlap$_{j+1}$* vom Ende des vorderen Frequenzbandes und dem negativen Mittelwert *secondOverlap$_{j+1}$* vom Anfang des nachfolgenden Frequenzbandes:

$$correction_{j+1} = correction_j + secondOverlap_{j+1} - firstOverlap_{j+1},$$

mit *correction$_1$* = 0 für den ersten Bereich und *j* = 1, ..., (Anzahl der Frequenzbänder-1).

Zu den Gruppenlaufzeiten bzw. Amplitudenwerte werden abhängig vom Frequenzband *j* die dazugehörigen Korrekturwerte *correction$_j$* addiert.

Für jeden Frequenzbin wird aus den verschobenen Werten der Mittelwert gebildet und das Ergebnis als Gruppenlaufzeitverlauf bzw. Amplitudenverlauf zur weiteren Berechnung verwendet.

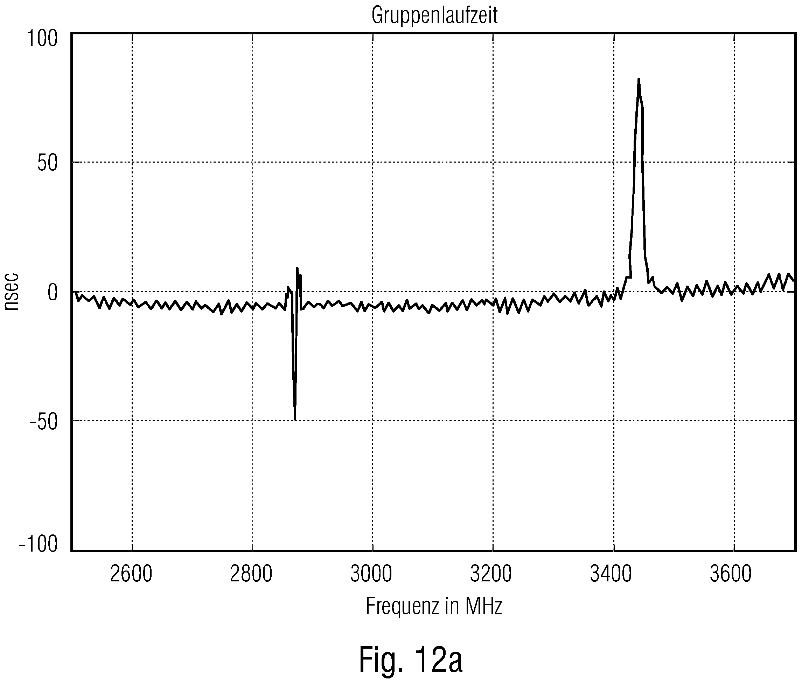

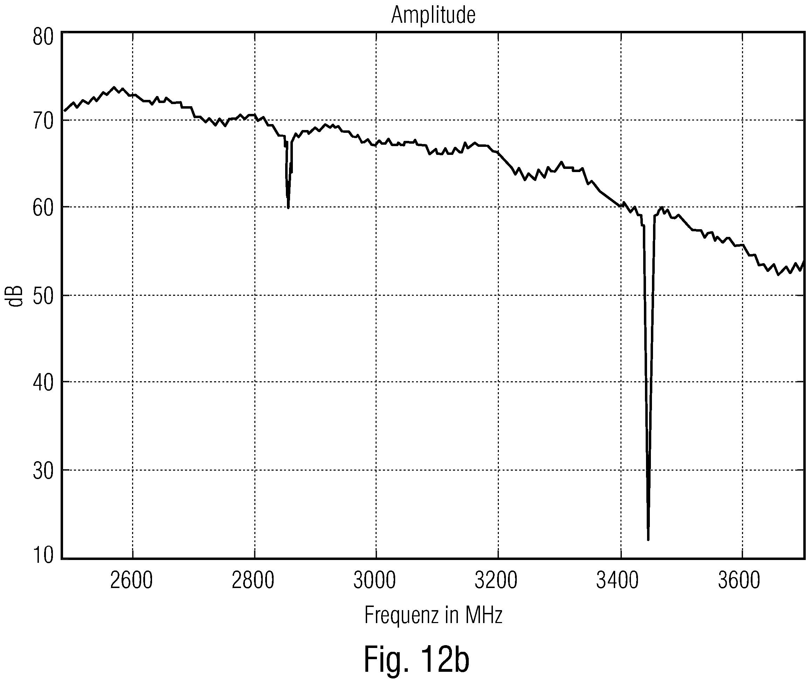

Fig. 12a und 12b zeigen dann ein Ergebnis, wie es durch die Vorrichtung von Fig. 1 erhalten wird, nämlich einen durchgehenden Verlauf der Gruppenlaufzeitinformationen über der Frequenz und der Amplitudeninformationen über der Frequenz in dem gesamten besonders interessierenden Frequenzband von etwa 2500 MHz bis 3700 MHz. Es sei jedoch darauf hingewiesen, dass entsprechend ein kompletter durchgehender fein aufgelöster und effizient aufgezeichneter Bereich bereits für das Übertragungsmedium ab der Frequenz von 1000 MHz bis 5000 MHz oder darüber oder darunter erhalten werden kann. Die Informationen aus Fig. 12a bzw. 12b können nunmehr dazu verwendet werden, um Reparaturen an der Infrastruktur vorzunehmen, oder um einen Sender/Empfänger für Nutzdaten entsprechend anzusteuern, damit eine gute Ausnutzung erhalten wird. Alternativ oder zusätzlich können die Informationen auch zur Vorverzerrung auf Senderseite eingesetzt werden.

Nachfolgend werden Beispiele der vorliegenden Erfindung dargelegt, wobei die Bezugszeichen in Klammern lediglich erläuternd zu verstehen sind.

1. Vorrichtung zum Erfassen von Gruppenlaufzeitinformationen über der Frequenz für ein Übertragungsmedium (100), mit folgenden Merkmalen:

einem Empfänger (110) zum Empfangen eines Messsignals, um ein Empfangssignal zu liefern, wobei das Messsignal zumindest ein erstes Trägersignal (211) bei einer ersten Trägerfrequenz, ein zweites Trägersignal (212) bei einer zweiten Trägerfrequenz und ein drittes Trägersignal (213) bei einer dritten Trägerfrequenz aufweist, wobei Sende-Phaseninformationen über die Trägersignale bekannt sind oder herleitbar sind;

einem Frequenzanalysator (120) zum Analysieren des Empfangssignals, um Empfangs-Phaseninformationen über das erste Trägersignal (211), das zweite Trägersignal (212) und das dritte Trägersignal (213) zu erhalten; und

einem Prozessor (130)

zum Bilden (310) einer ersten kombinierten Phaseninformation aus den Empfangs-Phaseninformationen von einem ersten Paar von Trägersignalen und zum Bilden einer zweiten kombinierten Phaseninformation aus den Empfangs-Phaseninformationen von einem zweiten Paar von Trägersignalen, wobei das zweite Paar von Trägersignalen unterschiedlich zu dem ersten Paar von Trägersignalen ist,

zum Bilden (320) einer ersten Gruppenlaufzeitinformation aus der ersten kombinierten Phaseninformation und den Sende-Phaseninformationen bezüglich des ersten Paares von Trägersignalen und zum Bilden einer zweiten Gruppenlaufzeitinformation aus der zweiten kombinierten Phaseninformation und den Sende-Phaseninformationen bezüglich des zweiten Paares von Trägersignalen, und

zum Zuordnen (330) der ersten Gruppenlaufzeitinformation zu einer ersten Frequenz und der zweiten Gruppenlaufzeitinformation zu einer zweiten Frequenz, wobei die erste Frequenz von Frequenzen des ersten Paares von Trägersignalen abgeleitet ist, und wobei die zweite Frequenz von Frequenzen des zweiten Paares von Trägersignalen abgeleitet ist.

2. Vorrichtung nach Beispiel 1, bei der die Sende-Phaseninformationen eine erste Sendedifferenz zwischen dem zweiten Trägersignal und dem ersten Trägersignal und eine zweite Sendedifferenz zwischen dem zweiten Trägersignal und dem dritten Trägersignal aufweist,

wobei der Frequenzanalysator ausgebildet ist, um einen ersten Empfangsphasenwert für das erste Trägersignal (211), einen zweiten Empfangsphasenwert für das zweite Trägersignal (212) und einen dritten Empfangsphasenwert für das dritte Trägersignal (213) zu erhalten,

wobei der Prozessor (130) ausgebildet ist, um als die erste kombinierte Phaseninformation eine Empfangsdifferenz aus dem ersten Empfangsphasenwert und dem zweiten Empfangsphasenwert zu berechnen, und um als die zweite kombinierte Phaseninformation eine zweite Empfangsdifferenz aus dem zweiten Empfangs-Phasenwert und dem dritten Empfangs-Phasenwert zu berechnen, und

wobei der Prozessor (130) ausgebildet ist, um die erste Gruppenlaufzeitinformation aus der ersten Empfangsdifferenz und der ersten Sendedifferenz zu berechnen, und um die zweite Gruppenlaufzeitinformation aus der zweiten Empfangsdifferenz und der zweiten Sendedifferenz zu berechnen.

3. Vorrichtung nach Beispiel 2, bei der der Prozessor (130) ausgebildet ist, um die Gruppenlaufzeitinformation aus einer Differenz zwischen der ersten Empfangsdifferenz und der ersten Sendedifferenz zu berechnen, und um die zweite Gruppenlaufzeitinformation aus einer Differenz zwischen der zweiten Empfangsdifferenz und der zweiten Sendedifferenz zu berechnen.

4. Vorrichtung nach Beispiel 2 oder 3, bei der der Prozessor (130) ausgebildet ist, um eine erste Sende-Empfangs-Differenz aus der ersten Empfangsdifferenz und der ersten Sendedifferenz zu berechnen (420), und um eine zweite Sende-Empfangs-Differenz aus der zweiten Empfangsdifferenz und der zweiten Sendedifferenz zu berechnen (420), um eine Phasenkorrektur der ersten Sende-Empfangs-Differenz und der zweiten Sende-Empfangs-Differenz vorzunehmen (450), falls eine Differenz aus der zweiten Sende-Empfangs-Differenz und der ersten Sende-Empfangs-Differenz größer als eine Phasenschwelle ist, und um aus einer ersten phasenkorrigierten Sende-Empfangs-Differenz die ersten Gruppenlaufzeitinformationen zu berechnen (430), und um aus einer zweiten phasenkorrigierten Sende-Empfangs-Differenz die zweiten Gruppenlaufzeitinformationen zu berechnen (430).

5. Vorrichtung nach einem der Beispiele 2 bis 4,
bei der der Prozessor (130) ausgebildet ist, um eine unkorrigierte erste Empfangs-Differenz aus dem ersten Empfangsphasenwert und dem zweiten Empfangsphasenwert zu berechnen, und um eine unkorrigierte erste Sende-Differenz aus einem ersten Sendephasenwert für das erste Trägersignal und einem zweiten Sendephasenwert für das zweite Trägersignal zu berechnen, und um eine Phasenkorrektur vorzunehmen, falls die unkorrigierte erste Empfangs-Differenz oder die unkorrigierte erste Sende-Differenz größer als eine Korrekturschwelle ist (440).

6. Vorrichtung nach einem der vorhergehenden Beispiele,
bei der der Empfänger (110) ausgebildet ist, um die Sende-Phaseninformationen durch Empfangen von Seiteninformationen über die Sende-Phaseninformationen oder durch Schätzen aus den Empfangs-Phaseninformationen unter Verwendung einer Kenntnis über erlaubte Werte der Sende-Phaseninformationen bei einem Einspeisen des Messsignals in das Übertragungsmedium zu bestimmen.

7. Vorrichtung nach einem der vorhergehenden Beispiele,
bei der die Sende-Phaseninformationen für einen Träger des ersten Trägersignals (211), des zweiten Trägersignals (212) oder des dritten Trägersignals (213) eine Phase von + oder - 90 Grad und für ein anderes Trägersignal des ersten Trägersignals, des zweiten Trägersignals und des dritten Trägersignals eine Phase von 0 oder 180 Grad umfasst, und
bei der der Prozessor (130) ausgebildet ist, um als eine Phasenschwelle oder als eine Korrekturschwelle einen Wert von 180 Grad zu verwenden.

8. Vorrichtung nach einem der vorhergehenden Beispiele,
bei der das Empfangssignal eine Anzahl von weiteren Trägersignalen zusätzlich zu dem ersten Trägersignal, dem zweiten Trägersignal und dem dritten Trägersignal aufweist, die über einen Trägersignalabstand frequenzmäßig beabstandet sind, wobei die Anzahl wenigstens 30 beträgt, und
wobei der Frequenzanalysator (120) ausgebildet ist, um für jedes Trägersignal als Empfangs-Phaseninformation einen Phasenwert zu berechnen,
wobei der Prozessor (130) ausgebildet ist, um die Gruppenlaufzeitinformationen für jede Trägerfrequenz außer einer Trägerfrequenz zu bestimmen, so dass für eine Anzahl von n Trägerinformationen (n-1) Gruppenlaufzeitinformationen bestimmt werden und (n-1) Trägerfrequenzen zugewiesen werden.

9. Vorrichtung nach einem der vorhergehenden Beispiele,

bei der der Frequenzanalysator (120) ausgebildet ist, um für die Trägersignale jeweils Empfangs-Amplitudeninformationen zu bestimmen und wobei der Prozessor (130) ausgebildet ist, um unter Verwendung der Empfangs-Amplitudeninformationen einen Dämpfungswert pro Trägerfrequenz zu bestimmen.

10. Vorrichtung nach einem der vorhergehenden Beispiele,
bei der der Empfänger (110) ausgebildet ist, um zeitlich nach dem Messsignal eines oder mehrere weitere Messsignale zu erhalten,
bei der der Frequenzanalysator (120) ausgebildet ist, um das eine oder die mehreren weiteren Messsignale zu analysieren, und
bei der der Prozessor (130) ausgebildet ist, um auch für das eine oder die weiteren Messsignale die Gruppenlaufzeitinformationen zu bestimmen,
wobei der Prozessor (130) ferner ausgebildet ist, um aus den Gruppenlaufzeitinformationen für das Messsignal und das eine oder die mehreren weiteren Messsignale durch Auswahl oder Kombination von einzelnen Gruppenlaufzeitinformationen pro Trägersignal die Gruppenlaufzeitinformationen für die Trägerfrequenzen zu bestimmen.

11. Vorrichtung nach einem der vorhergehenden Beispiele,
bei der das erste Trägersignal, das zweite Trägersignal und das dritte Trägersignal sinusförmig sind und der Frequenzanalysator (120) ausgebildet ist, um eine Fourier-Analyse des Empfangssignals durchzuführen.

12. Vorrichtung nach einem der vorhergehenden Beispiele,
bei der der Empfänger (110) ausgebildet ist, um unter Verwendung einer ersten Lokaloszillatorfrequenz (116) einen ersten Frequenzausschnitt in ein Basisband umzusetzen,
um unter Verwendung einer zweiten Lokaloszillatorfrequenz (116) einen zweiten Frequenzausschnitt in das Basisband umzusetzen,
wobei der Empfänger (110) gesteuert ist (140), um unter Verwendung eines festgelegten oder eines über einen Seitenkanal (180) empfangenen Ablaufplans die erste Lokaloszillatorfrequenz und die zweite Lokaloszillatorfrequenz zeitlich versetzt einzustellen, und
wobei die erste Lokaloszillatorfrequenz und die zweite Lokaloszillatorfrequenz so eingestellt sind, so dass sich der erste Frequenzausschnitt und der zweite Frequenzausschnitt in einem Überlappungsbereich (10a, 10b, 10c, 10d, 10e) überlappen, so dass für Trägerfrequenzen in dem Überlappungsbereich jeweils mehrere Gruppenlaufzeitinformationen aus Messungen mit verschiedenen Lokaloszillatorfrequenzen erhalten werden.

13. Vorrichtung nach Beispiel 12, bei der der Empfänger (110) ausgebildet ist, um eine Einseitenband-Demodulation unter Verwendung der ersten Lokaloszillatorfrequenz und der zweiten Lokaloszillatorfrequenz durchzuführen,
wobei der erste Frequenzabschnitt frequenzmäßig unterhalb der ersten Lokaloszillatorfrequenz angeordnet ist,
wobei der zweite Frequenzabschnitt frequenzmäßig unter der zweiten Lokaloszillatorfrequenz angeordnet ist, und
wobei der Empfänger (110) ausgebildet ist, um unter Verwendung einer dritten Lokaloszillatorfrequenz einen dritten Frequenzabschnitt in das Basisband umzusetzen, wobei der dritte Frequenzabschnitt oberhalb der dritten Lokaloszillatorfrequenz angeordnet ist, wobei die dritte Lokaloszillatorfrequenz höher als die erste Lokaloszillatorfrequenz oder kleiner als die zweite Lokaloszillatorfrequenz ist, wobei sich der zweite Frequenzabschnitt und der dritte Frequenzabschnitt überlappen.

14. Vorrichtung nach einem der vorhergehenden Beispiele,
bei der der Empfänger (110) einen Analog/Digital-Wandler (114) und einen Empfangsspeicher (118) aufweist, wobei ferner eine Zeitsteuerung (140) vorgesehen ist, wobei die Zeitsteuerung (140) ausgebildet ist, um den Empfangsspeicher (118) oder den Analog/Digital-Wandler (114) so zu steuern, dass ein digitales Messsignal von einem Startzeitpunkt bis zu einem Endzeitpunkt zeitlich geordnet gespeichert wird, wobei der Frequenzanalysator (120) ausgebildet ist, um auf den Empfangsspeicher (118) zuzugreifen, um unter Verwendung des zeitlich geordneten Empfangssignals eine Frequenzanalyse durchzuführen.

15. Vorrichtung nach einem der Beispiele 12 bis 14,
bei der der Prozessor (130) ausgebildet ist, um unter Verwendung der Gruppenlaufzeitinformationen für die verschiedenen Lokaloszillatorfrequenzen in dem Überlappungsbereich Gruppenlaufzeitinformationen außerhalb des Überlappungsbereichs für den ersten Frequenzabschnitt oder den zweiten Frequenzabschnitt zu modifizieren, um Diskontinuitäten aufgrund der unterschiedlichen Lokaloszillatorfrequenzen zu reduzieren oder zu eliminieren.

16. Vorrichtung nach Beispiel 15,
bei der der Prozessor (130) ausgebildet ist, um aus Gruppenlaufzeitinformationen des ersten Frequenzabschnitts in dem Überlappungsbereich einen ersten Mittelwert zu berechnen, um aus Gruppenlaufzeitinformationen des zweiten Frequenzabschnitts in dem Überlappungsbereich einen zweiten Mittelwert zu bilden,
um unter Verwendung des ersten Mittelwerts und des zweiten Mittelwerts einen Korrekturwert zu berechnen, und um den Korrekturwert mit den Gruppenlaufzeitinformationen des ersten Frequenzabschnitts oder des zweiten Frequenzabschnitts zu kombinieren, um korrigierte Gruppenlaufzeitinformationen zu erhalten.

17. Vorrichtung nach Beispiel 16, bei der der Prozessor (130) ausgebildet ist, um vor der Bildung des ersten Mittelwerts oder des zweiten Mittelwerts Ausreißer zu eliminieren.

18. Vorrichtung nach Beispiel 17, bei der der Prozessor (130) ausgebildet ist, um die Ausreißer unter Verwendung einer kumulativen Verteilungsfunktion und einem maximalen Quantilwert und einem minimalen Quantilwert zu berechnen.

19. Vorrichtung nach einem der Beispiele 16 bis 18,
bei der der Prozessor (130) ausgebildet ist, um Gruppenlaufzeitinformationen für einen dritten Frequenzabschnitt, der mit dem zweiten Frequenzabschnitt in einem weiteren Überlappungsbereich überlappt, zu berechnen, wobei der Prozessor (130) ausgebildet ist, um für eine Berechnung eines Korrekturwerts für den dritten Frequenzabschnitt neben Mittelwerten in dem weiteren Überlappungsbereich einen Korrekturwert aus dem Überlappungsbereich zwischen dem ersten Frequenzabschnitt und dem zweiten Frequenzabschnitt zu verwenden.

20. Vorrichtung nach einem der vorhergehenden Beispiele,
bei der der Prozessor (130) ausgebildet ist, um unter Verwendung der Gruppenlaufzeitinformationen Steuerinformationen für einen Sender für Nutzinformationen über das Übertragungsmedium (100) zu ermitteln, um eine gewünschte Übertragungsrate und/oder eine gewünschte Fehlerrate und/oder eine Vorverzerrung bei der Übertragung der Nutzinformationen über das Übertragungsmedium (100) zu erreichen.

21. Vorrichtung nach einem der vorhergehenden Beispiele,
bei der das Übertragungsmedium (100) eine koaxiale Infrastruktur ist, bei der eine Bandbreite des Empfangssignals zwischen 50 MHz und 500 MHz ist, bei der ein Messbereich der koaxialen Infrastruktur bei einer Frequenz größer oder gleich 1000 MHz startet und bei einer Frequenz kleiner oder gleich 5000 MHz endet, und bei der eine Länge der koaxialen Infrastruktur größer als 50 m ist.

22. Vorrichtung zum Senden eines Messsignals über ein Übertragungsmedium (100), mit folgenden Merkmalen:

einem Prozessor (410) zum Erzeugen eines Messsignals, wobei das Messsignal zumindest ein erstes Trägersignal (201) bei einer ersten Trägerfrequenz, ein zweites Trägersignal (202) bei einer zweiten Trägerfrequenz und ein drittes Trägersignal (203) bei einer dritten Trägerfrequenz aufweist, wobei Sende-Phaseninformationen über die Trägersignale definiert sind; und

einem Sender (420) zum Einspeisen des Messsignals in das Übertragungsmedium (100).

23. Vorrichtung nach Beispiel 22, bei der der Prozessor (410) ausgebildet ist, um das Messsignal in einem Basisband zu erzeugen, und bei der der Sender (420) ausgebildet ist, um unter Verwendung eines Lokaloszillators (424) das Messsignal von dem Basisband in ein Übertragungsband umzusetzen, das höherfrequenter als das Basisband ist.

24. Vorrichtung nach Beispiel 22 oder 23, bei der der Prozessor (410) ausgebildet ist, um das Messsignal durch digitales Aufsummieren (412) von sinusförmigen Trägersignalen bei den Trägerfrequenzen zu erzeugen, wobei die sinusförmigen Trägersignale definierte Phaseninformationen zueinander haben.

25. Vorrichtung nach einem der Beispiele 22 bis 24,
bei der der Prozessor (410) ausgebildet ist, um das Messsignal als zyklisches Signal zu erzeugen,
um das zyklische Messsignal in einem Senderspeicher (414) zu speichern,
um das zyklische Messsignal nacheinander eine definierte Anzahl von Malen an einen Digital/Analog-Wandler (416) zu übermitteln, um ein Basisbandsignal zu erhalten, das eine Folge von analogen Versionen des Messsignals aufweist, und wobei der Sender (420) ausgebildet ist, um das Basisbandsignal unter Verwendung eines Lokaloszillators (424) in ein Übertragungsband umzusetzen und in das Übertragungsmedium (100) einzuspeisen.

26. Verfahren zum Erfassen von Gruppenlaufzeitinformationen über der Frequenz für ein Übertragungsmedium (100), mit folgenden Schritten:

Empfangen (110) eines Messsignals, um ein Empfangssignal zu liefern, wobei das Messsignal zumindest ein erstes Trägersignal (211) bei einer ersten Trägerfrequenz, ein zweites Trägersignal (212) bei einer zweiten Trägerfrequenz und ein drittes Trägersignal (213) bei einer dritten Trägerfrequenz aufweist, wobei Sende-Phaseninformationen über die Trägersignale bekannt sind oder herleitbar sind;
Analysieren (120) des Empfangssignals, um Empfangs-Phaseninformationen über das erste Trägersignal (211), das zweite Trägersignal (212) und das dritte Trägersignal (213) zu erhalten;

Bilden (310) einer ersten kombinierten Phaseninformation aus den Empfangs-Phaseninformationen von einem ersten Paar von Trägersignalen und Bilden einer zweiten kombinierten Phaseninformation aus den Empfangs-Phaseninformationen von einem zweiten Paar von Trägersignalen, wobei das zweite Paar von Trägersignalen unterschiedlich zu dem ersten Paar von Trägersignalen ist,

Bilden (320) einer ersten Gruppenlaufzeitinformation aus der ersten kombinierten Phaseninformation und den Sende-Phaseninformationen bezüglich des ersten Paares von Trägersignalen und Bilden einer zweiten Gruppenlaufzeitinformation aus der zweiten kombinierten Phaseninformation und den Sende-Phaseninformationen bezüglich des zweiten Paares von Trägersignalen, und

Zuordnen (330) der ersten Gruppenlaufzeitinformation zu einer ersten Frequenz und der zweiten Gruppenlaufzeitinformation zu einer zweiten Frequenz, wobei die erste Frequenz von Frequenzen des ersten Paares von Trägersignalen abgeleitet ist, und wobei die zweite Frequenz von Frequenzen des zweiten Paares von Trägersignalen abgeleitet ist.

27. Verfahren zum Senden eines Messsignals über ein Übertragungsmedium (100), mit folgenden Schritten:

Erzeugen (410) eines Messsignals, wobei das Messsignal zumindest ein erstes Trägersignal (201) bei einer ersten Trägerfrequenz, ein zweites Trägersignal (202) bei einer zweiten Trägerfrequenz und ein drittes Trägersignal (203) bei einer dritten Trägerfrequenz aufweist, wobei Sende-Phaseninformationen über die Trägersignale definiert sind; und

Einspeisen (420) des Messsignals in das Übertragungsmedium (100).

28. Computer-Programm zum Ausführen des Verfahrens gemäß Beispiel 26 oder 27, wenn das Computer-Programm auf einem Computer oder Prozessor abläuft.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.
Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.
Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.
Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Vorrichtung zum Erfassen von Gruppenlaufzeitinformationen über der Frequenz für ein Übertragungsmedium (100), mit folgenden Merkmalen:

    einem Empfänger (110) zum Empfangen eines Messsignals, um ein Empfangssignal zu liefern, wobei das Messsignal zumindest ein erstes Trägersignal (211) bei einer ersten Trägerfrequenz, ein zweites Trägersignal (212) bei einer zweiten Trägerfrequenz und ein drittes Trägersignal (213) bei einer dritten Trägerfrequenz aufweist, wobei Sende-Phaseninformationen über die Trägersignale bekannt sind oder herleitbar sind;
    einem Frequenzanalysator (120) zum Analysieren des Empfangssignals, um Empfangs-Phaseninformationen über das erste Trägersignal (211), das zweite Trägersignal (212) und das dritte Trägersignal (213) zu erhalten; und
    einem Prozessor (130)

    zum Bilden (310) einer ersten kombinierten Phaseninformation aus den Empfangs-Phaseninformationen von einem ersten Paar von Trägersignalen und zum Bilden einer zweiten kombinierten Phaseninformation aus den Empfangs-Phaseninformationen von einem zweiten Paar von Trägersignalen, wobei das zweite Paar von Trägersignalen unterschiedlich zu dem ersten Paar von Trägersignalen ist,
    zum Bilden (320) einer ersten Gruppenlaufzeitinformation aus der ersten kombinierten Phaseninformation und den Sende-Phaseninformationen bezüglich des ersten Paares von Trägersignalen und zum Bilden einer zweiten Gruppenlaufzeitinformation aus der zweiten kombinierten Phaseninformation und den Sende-Phaseninformationen bezüglich des zweiten Paares von Trägersignalen, und

zum Zuordnen (330) der ersten Gruppenlaufzeitinformation zu einer ersten Frequenz und der zweiten Gruppenlaufzeitinformation zu einer zweiten Frequenz, wobei die erste Frequenz von Frequenzen des ersten Paares von Trägersignalen abgeleitet ist, und wobei die zweite Frequenz von Frequenzen des zweiten Paares von Trägersignalen abgeleitet ist.

2. Vorrichtung nach Anspruch 1, bei der die Sende-Phaseninformationen eine erste Sendedifferenz zwischen dem zweiten Trägersignal und dem ersten Trägersignal und eine zweite Sendedifferenz zwischen dem zweiten Trägersignal und dem dritten Trägersignal aufweist, wobei der Frequenzanalysator ausgebildet ist, um einen ersten Empfangsphasenwert für das erste Trägersignal (211), einen zweiten Empfangsphasenwert für das zweite Trägersignal (212) und einen dritten Empfangsphasenwert für das dritte Trägersignal (213) zu erhalten, wobei der Prozessor (130) ausgebildet ist, um als die erste kombinierte Phaseninformation eine Empfangsdifferenz aus dem ersten Empfangsphasenwert und dem zweiten Empfangsphasenwert zu berechnen, und um als die zweite kombinierte Phaseninformation eine zweite Empfangsdifferenz aus dem zweiten Empfangs-Phasenwert und dem dritten Empfangs-Phasenwert zu berechnen, und wobei der Prozessor (130) ausgebildet ist, um die erste Gruppenlaufzeitinformation aus der ersten Empfangsdifferenz und der ersten Sendedifferenz zu berechnen, und um die zweite Gruppenlaufzeitinformation aus der zweiten Empfangsdifferenz und der zweiten Sendedifferenz zu berechnen, oder

bei der der Prozessor (130) ausgebildet ist, um die Gruppenlaufzeitinformation aus einer Differenz zwischen der ersten Empfangsdifferenz und der ersten Sendedifferenz zu berechnen, und um die zweite Gruppenlaufzeitinformation aus einer Differenz zwischen der zweiten Empfangsdifferenz und der zweiten Sendedifferenz zu berechnen, oder

bei der der Prozessor (130) ausgebildet ist, um eine erste Sende-Empfangs-Differenz aus der ersten Empfangsdifferenz und der ersten Sendedifferenz zu berechnen (420), und um eine zweite Sende-Empfangs-Differenz aus der zweiten Empfangsdifferenz und der zweiten Sendedifferenz zu berechnen (420), um eine Phasenkorrektur der ersten Sende-Empfangs-Differenz und der zweiten Sende-Empfangs-Differenz vorzunehmen (450), falls eine Differenz aus der zweiten Sende-Empfangs-Differenz und der ersten Sende-Empfangs-Differenz größer als eine Phasenschwelle ist, und um aus einer ersten phasenkorrigierten Sende-Empfangs-Differenz die ersten Gruppenlaufzeitinformationen zu berechnen (430), und um aus einer zweiten phasenkorrigierten Sende-Empfangs-Differenz die zweiten Gruppenlaufzeitinformationen zu berechnen (430), oder

bei der der Prozessor (130) ausgebildet ist, um eine unkorrigierte erste Empfangs-Differenz aus dem ersten Empfangsphasenwert und dem zweiten Empfangsphasenwert zu berechnen, und um eine unkorrigierte erste Sende-Differenz aus einem ersten Sendephasenwert für das erste Trägersignal und einem zweiten Sendephasenwert für das zweite Trägersignal zu berechnen, und um eine Phasenkorrektur vorzunehmen, falls die unkorrigierte erste Empfangs-Differenz oder die unkorrigierte erste Sende-Differenz größer als eine Korrekturschwelle ist (440).

3. Vorrichtung nach einem der vorhergehenden Ansprüche,
bei der der Empfänger (110) ausgebildet ist, um die Sende-Phaseninformationen durch Empfangen von Seiteninformationen über die Sende-Phaseninformationen oder durch Schätzen aus den Empfangs-Phaseninformationen unter Verwendung einer Kenntnis über erlaubte Werte der Sende-Phaseninformationen bei einem Einspeisen des Messsignals in das Übertragungsmedium zu bestimmen, oder

bei der die Sende-Phaseninformationen für einen Träger des ersten Trägersignals (211), des zweiten Trägersignals (212) oder des dritten Trägersignals (213) eine Phase von + oder - 90 Grad und für ein anderes Trägersignal des ersten Trägersignals, des zweiten Trägersignals und des dritten Trägersignals eine Phase von 0 oder 180 Grad umfasst, und bei der der Prozessor (130) ausgebildet ist, um als eine Phasenschwelle oder als eine Korrekturschwelle einen Wert von 180 Grad zu verwenden, oder

bei der das Empfangssignal eine Anzahl von weiteren Trägersignalen zusätzlich zu dem ersten Trägersignal, dem zweiten Trägersignal und dem dritten Trägersignal aufweist, die über einen Trägersignalabstand frequenzmäßig beabstandet sind, wobei die Anzahl wenigstens 30 beträgt, und wobei der Frequenzanalysator (120) ausgebildet ist, um für jedes Trägersignal als Empfangs-Phaseninformation einen Phasenwert zu berechnen, wobei der Prozessor (130) ausgebildet ist, um die Gruppenlaufzeitinformationen für jede Trägerfrequenz außer einer Trägerfrequenz zu bestimmen, so dass für eine Anzahl von n Trägerinformationen (n-1) Gruppenlaufzeitinformationen bestimmt werden und (n-1) Trägerfrequenzen zugewiesen werden, oder

bei der der Frequenzanalysator (120) ausgebildet ist, um für die Trägersignale jeweils Empfangs-Amplitudeninformationen zu bestimmen und wobei der Prozessor (130) ausgebildet ist, um unter Verwendung der Empfangs-Amplitudeninformationen einen Dämpfungswert pro Trägerfrequenz zu bestimmen.

4. Vorrichtung nach einem der vorhergehenden Ansprüche,

bei der der Empfänger (110) ausgebildet ist, um zeitlich nach dem Messignal eines oder mehrere weitere Messignale zu erhalten, bei der der Frequenzanalysator (120) ausgebildet ist, um das eine oder die mehreren weiteren Messignale zu analysieren, und bei der der Prozessor (130) ausgebildet ist, um auch für das eine oder die weiteren Messignale die Gruppenlaufzeitinformationen zu bestimmen, wobei der Prozessor (130) ferner ausgebildet ist, um aus den Gruppenlaufzeitinformationen für das Messignal und das eine oder die mehreren weiteren Messignale durch Auswahl oder Kombination von einzelnen Gruppenlaufzeitinformationen pro Trägersignal die Gruppenlaufzeitinformationen für die Trägerfrequenzen zu bestimmen, oder

bei der das erste Trägersignal, das zweite Trägersignal und das dritte Trägersignal sinusförmig sind und der Frequenzanalysator (120) ausgebildet ist, um eine Fourier-Analyse des Empfangssignals durchzuführen, oder

bei der der Empfänger (110) ausgebildet ist, um unter Verwendung einer ersten Lokaloszillatorfrequenz (116) einen ersten Frequenzausschnitt in ein Basisband umzusetzen, um unter Verwendung einer zweiten Lokaloszillatorfrequenz (116) einen zweiten Frequenzausschnitt in das Basisband umzusetzen, wobei der Empfänger (110) gesteuert ist (140), um unter Verwendung eines festgelegten oder eines über einen Seitenkanal (180) empfangenen Ablaufplans die erste Lokaloszillatorfrequenz und die zweite Lokaloszillatorfrequenz zeitlich versetzt einzustellen, und wobei die erste Lokaloszillatorfrequenz und die zweite Lokaloszillatorfrequenz so eingestellt sind, so dass sich der erste Frequenzausschnitt und der zweite Frequenzausschnitt in einem Überlappungsbereich (10a, 10b, 10c, 10d, 10e) überlappen, so dass für Trägerfrequenzen in dem Überlappungsbereich jeweils mehrere Gruppenlaufzeitinformationen aus Messungen mit verschiedenen Lokaloszillatorfrequenzen erhalten werden.

5. Vorrichtung nach Anspruch 4, bei der der Empfänger (110) ausgebildet ist, um eine Einseitenband-Demodulation unter Verwendung der ersten Lokaloszillatorfrequenz und der zweiten Lokaloszillatorfrequenz durchzuführen, wobei der erste Frequenzabschnitt frequenzmäßig unterhalb der ersten Lokaloszillatorfrequenz angeordnet ist, wobei der zweite Frequenzabschnitt frequenzmäßig unter der zweiten Lokaloszillatorfrequenz angeordnet ist, und wobei der Empfänger (110) ausgebildet ist, um unter Verwendung einer dritten Lokaloszillatorfrequenz einen dritten Frequenzabschnitt in das Basisband umzusetzen, wobei der dritte Frequenzabschnitt oberhalb der dritten Lokaloszillatorfrequenz angeordnet ist, wobei die dritte Lokaloszillatorfrequenz höher als die erste Lokaloszillatorfrequenz oder kleiner als die zweite Lokaloszillatorfrequenz ist, wobei sich der zweite Frequenzabschnitt und der dritte Frequenzabschnitt überlappen.

6. Vorrichtung nach einem der vorhergehenden Ansprüche, bei der der Empfänger (110) einen Analog/Digital-Wandler (114) und einen Empfangsspeicher (118) aufweist, wobei ferner eine Zeitsteuerung (140) vorgesehen ist, wobei die Zeitsteuerung (140) ausgebildet ist, um den Empfangsspeicher (118) oder den Analog/Digital-Wandler (114) so zu steuern, dass ein digitales Messignal von einem Startzeitpunkt bis zu einem Endzeitpunkt zeitlich geordnet gespeichert wird, wobei der Frequenzanalysator (120) ausgebildet ist, um auf den Empfangsspeicher (118) zuzugreifen, um unter Verwendung des zeitlich geordneten Empfangssignals eine Frequenzanalyse durchzuführen.

7. Vorrichtung nach einem der Ansprüche 5 bis 6, bei der der Prozessor (130) ausgebildet ist, um unter Verwendung der Gruppenlaufzeitinformationen für die verschiedenen Lokaloszillatorfrequenzen in dem Überlappungsbereich Gruppenlaufzeitinformationen außerhalb des Überlappungsbereichs für den ersten Frequenzabschnitt oder den zweiten Frequenzabschnitt zu modifizieren, um Diskontinuitäten aufgrund der unterschiedlichen Lokaloszillatorfrequenzen zu reduzieren oder zu eliminieren.

8. Vorrichtung nach Anspruch 7, bei der der Prozessor (130) ausgebildet ist, um aus Gruppenlaufzeitinformationen des ersten Frequenzabschnitts in dem Überlappungsbereich einen ersten Mittelwert zu berechnen, um aus Gruppenlaufzeitinformationen des zweiten Frequenzabschnitts in dem Überlappungsbereich einen zweiten Mittelwert zu bilden, um unter Verwendung des ersten Mittelwerts und des zweiten Mittelwerts einen Korrekturwert zu berechnen, und um den Korrekturwert mit den Gruppenlaufzeitinformationen des ersten Frequenzabschnitts oder des zweiten Frequenzabschnitts zu kombinieren, um korrigierte Gruppenlaufzeitinformationen zu erhalten.

9. Vorrichtung nach Anspruch 16, bei der der Prozessor (130) ausgebildet ist, um vor der Bildung des ersten Mittelwerts oder des zweiten Mittelwerts Ausreißer zu eliminieren, oder bei der der Prozessor (130) ausgebildet ist, um die Ausreißer unter Verwendung einer kumulativen Verteilungsfunktion und einem maximalen Quantilwert und einem minimalen Quantilwert zu berechnen, oder bei der der Prozessor (130) ausgebildet ist, um Gruppenlaufzeitinformationen für einen dritten Frequenzabschnitt, der mit dem zweiten Frequenzabschnitt in einem weiteren Überlappungsbereich überlappt, zu berechnen, wobei der Prozessor (130) ausgebildet ist, um für eine Berechnung eines Korrekturwerts für den dritten Frequenzabschnitt neben Mittelwerten in dem weiteren Überlappungsbereich einen Korrekturwert aus dem Überlappungsbereich zwischen dem ersten Frequenzabschnitt und dem zweiten Frequenzabschnitt zu verwenden.

10. Vorrichtung nach einem der vorhergehenden Ansprüche,

bei der der Prozessor (130) ausgebildet ist, um unter Verwendung der Gruppenlaufzeitinformationen Steuerinformationen für einen Sender für Nutzinformationen über das Übertragungsmedium (100) zu ermitteln, um eine gewünschte Übertragungsrate und/oder eine gewünschte Fehlerrate und/oder eine Vorverzerrung bei der Übertragung der Nutzinformationen über das Übertragungsmedium (100) zu erreichen, oder
bei der das Übertragungsmedium (100) eine koaxiale Infrastruktur ist, bei der eine Bandbreite des Empfangssignals zwischen 50 MHz und 500 MHz ist, bei der ein Messbereich der koaxialen Infrastruktur bei einer Frequenz größer oder gleich 1000 MHz startet und bei einer Frequenz kleiner oder gleich 5000 MHz endet, und bei der eine Länge der koaxialen Infrastruktur größer als 50 m ist.

11. Vorrichtung zum Senden eines Messsignals über ein Übertragungsmedium (100), mit folgenden Merkmalen:

einem Prozessor (410) zum Erzeugen eines Messsignals, wobei das Messsignal zumindest ein erstes Trägersignal (201) bei einer ersten Trägerfrequenz, ein zweites Trägersignal (202) bei einer zweiten Trägerfrequenz und ein drittes Trägersignal (203) bei einer dritten Trägerfrequenz aufweist, wobei Sende-Phaseninformationen über die Trägersignale definiert sind; und
einem Sender (420) zum Einspeisen des Messsignals in das Übertragungsmedium (100),
wobei der Prozessor (410) ausgebildet ist, um das Messsignal als zyklisches Signal zu erzeugen, um das zyklische Messsignal in einem Senderspeicher (414) zu speichern, und um das zyklische Messsignal nacheinander eine definierte Anzahl von Malen an einen Digital/Analog-Wandler (416) zu übermitteln, um ein Basisbandsignal zu erhalten, das eine Folge von analogen Versionen des Messsignals aufweist, und
wobei der Sender (420) ausgebildet ist, um das Basisbandsignal unter Verwendung eines Lokaloszillators (424) in ein Übertragungsband umzusetzen und das umgesetzten Basisbandsignal in das Übertragungsmedium (100) einzuspeisen.

12. Vorrichtung nach Anspruch 11, bei der der Prozessor (410) ausgebildet ist, um das Messsignal durch digitales Aufsummieren (412) von sinusförmigen Trägersignalen bei den Trägerfrequenzen zu erzeugen, wobei die sinusförmigen Trägersignale definierte Phaseninformationen zueinander haben.

13. Verfahren zum Erfassen von Gruppenlaufzeitinformationen über der Frequenz für ein Übertragungsmedium (100), mit folgenden Schritten:

Empfangen (110) eines Messsignals, um ein Empfangssignal zu liefern, wobei das Messsignal zumindest ein erstes Trägersignal (211) bei einer ersten Trägerfrequenz, ein zweites Trägersignal (212) bei einer zweiten Trägerfrequenz und ein drittes Trägersignal (213) bei einer dritten Trägerfrequenz aufweist, wobei Sende-Phaseninformationen über die Trägersignale bekannt sind oder herleitbar sind;
Analysieren (120) des Empfangssignals, um Empfangs-Phaseninformationen über das erste Trägersignal (211), das zweite Trägersignal (212) und das dritte Trägersignal (213) zu erhalten;

Bilden (310) einer ersten kombinierten Phaseninformation aus den Empfangs-Phaseninformationen von einem ersten Paar von Trägersignalen und Bilden einer zweiten kombinierten Phaseninformation aus den Empfangs-Phaseninformationen von einem zweiten Paar von Trägersignalen, wobei das zweite Paar von Trägersignalen unterschiedlich zu dem ersten Paar von Trägersignalen ist,
Bilden (320) einer ersten Gruppenlaufzeitinformation aus der ersten kombinierten Phaseninformation und den Sende-Phaseninformationen bezüglich des ersten Paares von Trägersignalen und Bilden einer zweiten Gruppenlaufzeitinformation aus der zweiten kombinierten Phaseninformation und den Sende-Phaseninformationen bezüglich des zweiten Paares von Trägersignalen, und
Zuordnen (330) der ersten Gruppenlaufzeitinformation zu einer ersten Frequenz und der zweiten Gruppenlaufzeitinformation zu einer zweiten Frequenz, wobei die erste Frequenz von Frequenzen des ersten Paares von Trägersignalen abgeleitet ist, und wobei die zweite Frequenz von Frequenzen des zweiten Paares von Trägersignalen abgeleitet ist.

14. Verfahren zum Senden eines Messsignals über ein Übertragungsmedium (100), mit folgenden Schritten:

Erzeugen (410) eines Messsignals, wobei das Messsignal zumindest ein erstes Trägersignal (201) bei einer ersten Trägerfrequenz, ein zweites Trägersignal (202) bei einer zweiten Trägerfrequenz und ein drittes Trägersignal (203) bei einer dritten Trägerfrequenz aufweist, wobei Sende-Phaseninformationen über die Trägersignale definiert sind; und

Einspeisen (420) des Messsignals in das Übertragungsmedium (100),

wobei das Erzeugen (410) das Erzeugen des Messsignals als zyklisches Signal, das Speichern des zyklischen Messsignals in einem Senderspeicher (414), und das Übermitteln des zyklischen Messsignals nacheinander eine definierte Anzahl von Malen an einen Digital/Analog-Wandler (416) aufweist, um ein Basisbandsignal zu erhalten, das eine Folge von analogen Versionen des Messsignals aufweist, und

wobei das Einspeisen (420) das Umsetzen des Basisbandsignals unter Verwendung eines Lokaloszillators (424) in ein Übertragungsband und das Einspeisen des umgesetzten Basisbandsignals in das Übertragungsmedium (100) aufweist.

15. Computer-Programm zum Ausführen des Verfahrens gemäß Anspruch 13 oder 14, wenn das Computer-Programm auf einem Computer oder Prozessor abläuft.

100 ⌇ 
```
┌─────────────────────────┐
│      (koaxiales)        │
│   Übertragungsmedium    │
└─────────────────────────┘
```

110 ⌇
```
┌─────────────────────────┐
│       Empfänger         │
└─────────────────────────┘
```

Sende-Phaseninformationen
sind bekannt und herleitbar
(Seitenkanal)

180

···

120 ⌇
```
┌─────────────────────────┐
│    Frequenzanalysator   │
└─────────────────────────┘
```

Empfangs-Phaseninfos
für die Trägersignale

130 ⌇
```
┌─────────────────────────┐
│        Prozessor        │
│  (kombinierte Phaseninfo │
│      aus zwei TS.)      │
└─────────────────────────┘
```

Gruppenlaufzeitinformationen
über die Frequenz

# Fig. 1

Fig. 2a

Sendesignal-Spektrum

Fig. 2b

Empfangssignal -Spektrum

phaseRX$_1$      phaseRX$_2$      phaseRX$_3$      phaseRX$_4$

Fig. 2c

GLZ(f)

Zuweisungsbereiche

z.B.:
GLZ$_1$:=0
GLZ$_2$ aus (f$_2$,f$_1$)[1.Paar]
GLZ$_3$ aus (f$_3$,f$_2$)[2.Paar]

Fig. 2d

Erhalten der Phaseninformationen der Trägersignale — 300

Bilden einer kombinierten Phaseninformation aus den Phaseninformationen von zwei Trägersignalen — 310

Bilden der Gruppenlaufzeitinformationen aus der kombinierten Phaseninformation und den Sende-Phaseninformationen — 320

Zuordnen der Gruppenlauf zeitinformation zu einer Frequenz ( z. B. 1.TF, 2.TF, 3.TF oder ein Mittelwert aus 2.TFrequenz) — 330

Fig. 3

- Berechnung der Differenz aufeinanderfolgenden Symbole:

$$\text{phaseDiff}_{TX}[ii] = \text{phase}_{TX}[ii+1] - \text{phase}_{TX}[ii]$$

$$\text{phaseDiff}_{RX}[ii] = \text{phase}_{RX}[ii+1] - \text{phase}_{RX}[ii]$$

← 410

- Korrigieren der Phasenwerte phaseDiff$_{TX}$ und phaseDiff$_{RX}$ um $\pm 2\pi$, falls absolute Sprüge größer als $\pi$ zwischen aufeinanderfolgenden Phasenwerte auftreten:

$$\text{phase}[jj] = \text{phase}[jj] \pm 2\pi$$

mit phase = phaseDiff$_{TX}$ bzw. phase = phaseDiff$_{RX}$

← 440 (optional)

und jj = ii+1, ..., (len$_{\text{freq}}$- 1), falls:

$$|\text{phase}[ii+1] - \text{phase}[ii]| > \pi$$

mit ii = 1, ..., (len$_{\text{freq}}$- 2)

- Subtrahieren der gesendeten Phasenwerte von den empfangenen Phasenwerte:

$$\text{p1p2}[ii] = \text{phaseDiff}_{RX}[ii] - \text{phaseDiff}_{TX}[ii]$$

← 420

- Korrigieren der Differenz p1p2 um $\pm 2\pi$, falls absolute Sprünge größer als $\pi$ zwischen aufeinanderfolgenden Werten auftreten:

$$\text{p1p2}[jj] = \text{p1p2}[jj] \pm 2\pi$$

mit jj = ii+1, ..., (len$_{\text{freq}}$- 1), falls:

← 450 (optional)

$$|\text{p1p2}[ii+1] - \text{p1p2}[ii]| > \pi$$

mit ii = 1, ..., (len$_{\text{freq}}$- 2)

- Berechnung der Gruppenlaufzeit gd[ii] in Nanosekunden:

$$\text{gd}[ii+1] = -\frac{\text{p1p2}[ii]}{2 \cdot \text{pi} \cdot \text{freq}_{\text{step}}} \cdot 1 \cdot 10^3$$

← 430 (optional)

mit ii = 1, ..., (len$_{\text{freq}}$- 1) und

gd[1]=0

## Fig. 4

Fig. 5

| $amp_{factor}$ | Amplitudencharakteristik | empfangene Amplitudencharakteristik |
|---|---|---|
| 1 | | |
| >1 | | |

Fig. 6

A(f)

zu vermessende Gesamt-Bandbreite

1
2
3
4

f

verschiedene
schmalbandige Trials

## Fig. 7

Knoten 1

Knoten 2

Fig. 13 — TX

$LO_{plan}$ von Knoten 1

RX — Fig. 1

180

Fig. 1 — RX

$LO_{plan}$ von Knoten 2

TX — Fig. 13

180

801

802

## Fig. 8

## Bevorzugte Wertebereiche für einzelne Parameter

- $SAMPLE_{FREQ}$ = 1000 MHz bis 10000 MHz oder 2000 bis 5000 MHz
- $NUM_{SAMPLES}$ = 4000 bis 12000
- $BW_{USE}$ = 50 bis 500 MHZ
- $TX_{SPACING}$ = 1 bis 30
- $OVERLAP_{MEASURE}$ = 2 bis 20
- $NUM_{SNAPSHOTS}$ = 1 bis 20
- $time_{start}$ = 2 bis 20
- $time_{snapshot}$ = 0,5 bis 5
- txlowfreq = 1500 bis 3500
- txhighfreq = 3000 bis 5000

# Fig. 9a

| LoPlan-Nummer | $lo_{freq}$ | iqinvert |
|---|---|---|
| 1 | 2700 | true |
| 2 | 3100 | true |
| 3 | 3400 | true |
| 4 | 3300 | false |
| 5 | 3600 | false |
| 6 | 3700 | false |

# Fig. 9b

Gruppenlaufzeit

Fig. 10a

EP 3 840 237 A1

Amplitude

Fig. 10b

Gruppenlaufzeiten aus den schmalbandigen Trials

verschobene Gruppenlaufzeiten

Fig. 11

EP 3 840 237 A1

Fig. 12a

Fig. 12b

Fig. 13

Europäisches
Patentamt

European
Patent Office

Office européen
des brevets

# EUROPÄISCHER RECHERCHENBERICHT

**Nummer der Anmeldung**

EP 20 21 4656

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 264 959 A (BLAAESS GERHARD) 28. April 1981 (1981-04-28) <br> * Spalte 1, Zeile 38 - Zeile 57 * <br> * Abbildung 1 * <br> * Spalte 3, Zeile 19 - Zeile 22 * <br> * Spalte 1, Zeile 68 - Spalte 2, Zeile 8 * <br> * Spalte 3, Zeile 27 - Zeile 40 * <br> * Spalte 6, Zeile 6 - Zeile 21 * <br> * Spalte 3, Zeile 1 - Zeile 5 * <br> ----- | 1-10,13, 15 | INV. H04B3/462 |
| X | EP 1 515 147 A1 (ROHDE & SCHWARZ [DE]) 16. März 2005 (2005-03-16) <br> * Absatz [0012] * <br> * Absatz [0029] * <br> * Absatz [0039] * <br> * Absatz [0041] - Absatz [0043] * <br> * Absatz [0026] * <br> * Absatz [0032] * <br> * Absatz [0026] - Absatz [0030] * <br> ----- | 1,3,4, 10-15 | |
| A | WO 2010/081725 A2 (ROHDE & SCHWARZ [DE]; BEDNORZ THILO [DE]; NEIDHARDT STEFFEN [DE]) 22. Juli 2010 (2010-07-22) <br> * Abbildungen 2A, 2B * <br> * Seite 29, Zeile 24 - Seite 39, Zeile 14 * <br> ----- | 1-15 | RECHERCHIERTE SACHGEBIETE (IPC) <br><br> H04B |

Der vorliegende Recherchenbericht wurde für alle Patentansprüche erstellt

| Recherchenort | Abschlußdatum der Recherche | Prüfer |
|---|---|---|
| Den Haag | 12. April 2021 | Gimmler-Dumont, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 21 4656

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-04-2021

| Im Recherchenbericht angeführtes Patentdokument | Datum der Veröffentlichung | Mitglied(er) der Patentfamilie | Datum der Veröffentlichung |
|---|---|---|---|
| US 4264959 A | 28-04-1981 | BE 867771 A<br>DE 2724991 A1<br>FR 2393316 A1<br>GB 1581502 A<br>IT 1095919 B<br>US 4264959 A | 02-10-1978<br>07-12-1978<br>29-12-1978<br>17-12-1980<br>17-08-1985<br>28-04-1981 |
| EP 1515147 A1 | 16-03-2005 | KEINE | |
| WO 2010081725 A2 | 22-07-2010 | DE 102010004726 A1<br>EP 2376931 A2<br>US 2011288820 A1<br>WO 2010081725 A2 | 22-07-2010<br>19-10-2011<br>24-11-2011<br>22-07-2010 |

Für nähere Einzelheiten zu diesem Anhang : siehe Amtsblatt des Europäischen Patentamts, Nr.12/82

EPO FORM P0461